# EUROPÄISCHE PATENTSCHRIFT

(11) **EP 4 573 359 B1**
(45) Veröffentlichungstag und Bekanntmachung des Hinweises auf die Patenterteilung: **06.05.2026**
(21) Anmeldenummer: 23761453.2
(22) Anmeldetag: 18.08.2023
(51) Int. Cl.: G01N 21/64, G02B 21/00, G02B 21/36, G02B 27/58

(54) **VERFAHREN UND VORRICHTUNG ZUM SIMULTANEN VERFOLGEN ZWEIER EMITTER**
METHOD AND DEVICE FOR SIMULTANEOUSLY TRACKING TWO EMITTERS
PROCÉDÉ ET DISPOSITIF DE SUIVI SIMULTANÉ DE DEUX ÉMETTEURS

(30) Priorität: 18.08.2022 DE 102022120952
(43) Veröffentlichungstag der Anmeldung: 25.06.2025
(73) Patentinhaber: Abberior Instruments GmbH, 37077 Göttingen (DE)
(72) Erfinder: DONNERT, Gerald, 37083 Göttingen (DE); REUSS, Matthias, 37083 Göttingen (DE); FISCHER, Joachim, 76228 Karlsruhe (DE); SCHMIDT, Roman, 37077 Göttingen (DE); ENGELHARDT, Tobias, 76137 Karlsruhe (DE); WILLEMER, Winfried, 37120 Bovenden (DE)
(86) Internationale Anmeldenummer: PCT/EP2023/072826
(87) Internationale Veröffentlichungsnummer: WO 2024/038190

(56) Entgegenhaltungen:
- EP-A1- 4 075 180
- WO-A1-2022/079265
- DE-A1- 102021 100 564
- JASMIN KATHRIN PAPE: "Multicolor 3D MINFLUX nanoscopy for biological imaging", DISSERTATION, 2020, Göttingen, GERMANY, XP093101419, Retrieved from the Internet <URL:http://dx.doi.org/10.53846/aoediss-8248> [retrieved on 20231114], DOI: 10.53846/aoediss-8248
- GWOSCH KLAUS C. ET AL: "MINFLUX nanoscopy delivers 3D multicolor nanometer resolution in cells", NATURE METHODS, vol. 17, no. 2, February 2020 (2020-02-01), New York, pages 217 - 224, XP055899632, ISSN: 1548-7091, Retrieved from the Internet <URL:https://www.nature.com/articles/s41592-019-0688-0.pdf> DOI: 10.1038/s41592-019-0688-0

## Beschreibung

### Technisches Gebiet der Erfindung

Die Erfindung betrifft das Gebiet der höchstauflösenden lichtoptischen Mikroskopie. Sie betrifft konkret Verfahren und Vorrichtungen zum simultanen Verfolgen der Bewegungen mehrerer Emitter, beispielsweise fluoreszenzmarkierter biologischer Strukturen, die zueinander während des Verfolgens einen Abstand aufweisen der kleiner ist als Beugungslimit, mit hoher Zeitauflösung.

### Stand der Technik

Als ein Mikroskopieverfahren zum Verfolgen schnell bewegter Partikel ist die interferometric scattering (iSCAT) microscopy bekannt. In der Publikation "Interferometric scattering microscopy reveals microsecond nanoscopic protein motion on a live cell membrane" (Taylor, R.W. et al., Nat. Photonics 13, 480-487 (2019). https://doi.org/10.1038/s41566-019-0414-6) wird eine Anwendung der iSCAT-Mikroskopie auf das Verfolgen von Proteinen in Membranen lebender Zellen beschrieben. Mit dem Verfahren werden bei einer zeitlichen Auflösung von besser als 20 µs örtliche Auflösung besser als 10 nm erreicht. Bei dem Verfahren wird die Interferenz zwischen Referenzlicht und Licht, das an einem an den zu verfolgenden Partikel, beispielsweise einem Biomolekül, gebundenen Marker, beispielsweise einem Gold-Nanopartikel gestreut wird, beobachtet. Das Verfahren ermöglicht zwar eine sehr gute zeitlich-örtliche Auflösung, weist aber den Nachteil auf, dass die zu verwendenden Marker vergleichsweise groß sind und daher großen Einfluss auf die Eigenschaften der Probe ausüben. Das Verfahren ist schon wegen der Größe der Marker nicht geeignet, zwei nur um wenige Nanometer voneinander beabstandete Objekte separat zu beobachten, um deren Bewegungen zu verfolgen.

Im Stand der Technik sind kamerabasierte lokalisationsmikroskopische Verfahren der Fluoreszenzmikroskopie bekannt, die eine Fluoreszenzbildgebung mit hoher Ortsauflösung im Bereich zumeist einiger zehn Nanometer in mehreren Farben, das heißt unter Nutzung von Fluorophoren, die stark unterschiedliche Anregungsspektren oder unterschiedliche Emissionsspektren oder beides aufweisen. Die örtlich zeitliche Auflösung ist bei diesen Verfahren durch die Kamera sowie durch die Helligkeit der Emitter limitiert, sodass sie allenfalls für das Beobachten langsamer Bewegungen geeignet sind. Geeignete Emitter sind insbesondere funktionalisierte Core-Shell Quantum Dots, die zwar sehr photostabil und sehr hell sind, aber bislang in der Fluoreszenzmikroskopie eher selten zur Anwendung kommen. Ein solches Verfahren ist beispielsweise in der Publikation "Differential Labeling of Myosin V Heads with Quantum Dots Allows Direct Visualization of Hand-Over-Hand Processivity" (Warshaw DM et al., Biophys J. 2005 May;88(5):L30-2. doi: 10.1529/biophysj.105.061903. Epub 2005 Mar 11. PMID: 15764654; PMCID: PMC1305523.) beschrieben. Es wird eine örtliche Auflösung von 6 nm bei einer zeitlichen Auflösung von 83 ms erreicht. Um die Bewegung von zweifach gefärbten Motorproteinen und damit die Bewegung der Enden der Motorproteine separat beobachten zu können, wurde eine sehr geringe ATP-Konzentration in der Probe eingestellt. Ähnliche Untersuchungen unter Nutzung von in der Fluoreszenzmikroskopie üblicheren Fluorophoren, nämlich Cy3 und Cy5, bei Nutzung zweier Anregungswellenlängen bei einer die Hintergrundfluoreszenz minimierenden TIRF-Beleuchtung werden in der Publikation "Single molecule high-resolution colocalization of Cy3 and Cy5 attached to macromolecules measures intramolecular distances through time" (L. Stirling Churchman et al., Proc Natl Acad Sci U S A. 2005 Feb 1;102(5):1419-23. Doi: 10.1073/pnas.0409487102. Epub 2005 Jan 24. PMID: 15668396; PMCID: PMC545495.) beschrieben. Hier wird bei einer Integrationszeit von 0,5 s eine laterale Auflösung von etwa 6 nm erreicht.

Ein Mehrfarben-Scanning-Mikroskop bzw. ein entsprechendes Verfahren, das eine Fluoreszenzbildgebung mit hoher Ortsauflösung im Bereich weniger Nanometer erlaubt, ist aus der Publikation "Ultrahigh-resolution multicolor colocalization of single fluorescent probes" (Thilo D. Lacoste et al., Proc Natl Acad Sci U S A. 2000 Aug 15;97(17):9461-6. Doi: 10.1073/pnas.170286097. PMID: 10931959; PMCID: PMC16886.) bekannt. Hierbei werden verschiedene Fluorophore, die alle mit derselben Wellenlänge angeregt werden, genutzt, da eine bei Nutzung mehrerer Anregungswellenlängen mit Blick auf die zu erreichende Auflösung notwendige Präzision der Überlagerung der Anregungslichtstrahlen nicht möglich sei. Die Probe wird konfokal abgetastet, das Fluoreszenzlicht wird spektral in zwei oder mehr Kanäle aufgespalten, aus den Messwerten wird ein Mehrfarbenbild erzeugt. Mit dem Verfahren werden Abstände zwischen verschiedenfarbigen Fluorophoren im Bereich von etwa 10 nm bestimmt. Dieses Verfahren ist ebenso wenig für das schnelle simultane und separate Verfolgen mehrerer Emitter geeignet wie die hier genannten kamerabasierten lokalisationsmikroskopischen Verfahren.

In der Publikation "Nanometer resolution imaging and tracking of fluorescent molecules with minimal photon fluxes" (Balzarotti, F. et al., Science. 2017 Feb 10;355(6325):606-612. doi: 10.1126/science.aak9913. Epub 2016 Dec 22. PMID: 28008086) wird ein Verfahren zum Lokalisieren und Verfolgen einzelner Emitter vorgestellt und als MINFLUX bezeichnet. Gemäß diesem Verfahren wird der Emitter mit fokussiertem Anregungslicht mit einer Intensitätsverteilung, die ein zentrales lokales Intensitätsminimum, insbesondere eine Nullstelle, mit angrenzenden Intensitätsanstiegsbereichen aufweist, beleuchtet, wobei deren Zentrum in einer zeitlichen Abfolge an verschiedenen Positionen derart in einem Nahbereich um eine vermutete Position des Emitters herum platziert wird, dass sich der Emitter jeweils innerhalb der das Minimum umgrenzenden Intensitätsanstiegsbereiche befindet, wobei die Fluoreszenzemission gemessen und der jeweiligen Position des Zentrums zugeordnet wird und wobei aus den Positionen und den zugeordneten Photonenzahlen oder Fluoreszenzintensitäten die Position des Emitters bestimmt wird. Für das Verfolgen eines Emitters in Echtzeit über einen Bereich, der erfordert, dass die Intensitätsverteilung dem Partikel nachgeführt wird, um zu erreichen, dass sich deren Zentrum in einer zeitlichen Abfolge jeweils an verschiedenen Positionen derart in einem Nahbereich um eine vermutete Position des Emitters befindet, dass sich der Emitter, dessen Bewegung verfolgt wird, jeweils innerhalb der das Minimum umgrenzenden Intensitätsanstiegsbereiche befindet, wird ein Verfahren zur Schätzung der Position eines Emitters in Echtzeit angegeben. Wesentlich bei den in der Publikation beschriebenen MINFLUX-Verfahren ist es, dass ein lokales Minimum einer Anregungslichtverteilung nah an der Position eines Emitters platziert wird, sodass der Emitter innerhalb der an das Minimum angrenzenden Intensitätsanstiegsbereiche liegt. Im Ausblick wird einerseits angedeutet, dass die Beleuchtungspositionen mit variierenden Intensitätsverteilungen beleuchtet werden können, und andererseits, dass das Verfahren zukünftig auch für die Anwendung für Mehrfarbenaufnahmen weiterentwickelt werden könne. In diesem Zusammenhang wird auf die Unterscheidung von Emissionsspektren, der Polarisation oder der Fluoreszenzlebensdauer hingewiesen. Entsprechende konkrete Lösungen werden nicht angegeben.

In der Dissertation von Jasmin Pape, "Multicolor 3D MINFLUX nanoscopy for biological imaging" (Göttingen, 2020, http://dx.doi.org/10.53846/goediss-8248) wird einerseits theoretischer Hintergrund zur Anwendung des MINFLUX-Verfahrens zum simultanen Verfolgen verschiedenfarbiger Emitter beschrieben und andererseits wird zwar ein erster experimenteller Machbarkeitsnachweis beschrieben, der sich aber lediglich auf immobilisierte Emitter bezieht und somit nicht auf das tatsächliche simultane Verfolgen zweier Emitter. Die theoretischen Betrachtungen beziehen sich auf eine Situation, bei der Emitter, die voneinander unterschiedliche spektrale Emissionsverteilungen aufweisen, sich gemeinsam in einem abgetasteten Nahbereich befinden und bei der die Fluoreszenzemission in mehreren Spektralkanälen detektiert wird. Die spektrale Trennung kann dabei vollständig oder unvollständig sein, das heißt, es wird auf den Einfluss von Cross-Talk eingegangen. Die Darlegungen der Theorie beziehen sich dabei auf den Informationsgehalt, der in entsprechend aufgenommen Daten grundsätzlich enthalten ist. Es wird angegeben, dass eine Positionsschätzung mittels eines verwendeten maximum likelihood estimators (MLE) einen Bias, also einen systematischen Fehler aufweist, der insbesondere bei kleinen Photonenzahlen relevant sei. Es wird sinngemäß darauf hingewiesen, dass die Information über die Lage der Emitter nicht auf einfache Weise wie bei der Bestimmung der Position nur eines Emitters extrahiert werden könne, weil, jedenfalls bei nicht verschwindendem Cross-Talk, die Bestimmungen der Positionen der Emitter nicht voneinander unabhängig durchgeführt werden können. Insbesondere wird festgestellt, dass zum Erhalten einer hohen Zeitauflösung beim Verfolgen von mehreren Emittern die Entwicklung eines Positionsschätzers, der keinen Bias aufweist, nötig sei. Ein solcher tatsächlich für das simultane Tracking zweier Fluorophore mit verschiedener spektraler Emission geeigneter Positionsschätzer wird in der Dissertation gerade nicht angegeben. Dementsprechend handelt es sich bei dem Machbarkeitsnachweis hinsichtlich des simultanen Verfolgens zweier Emitter um eine experimentelle Bestimmung der Lagen jeweils zweier immobilisierter Emitter im Rahmen einer nachträglichen detaillierten Analyse zu innerhalb jeweils ortsfester Nahbereiche aufgenommener Datensätze.

In der oben genannten Dissertation sowie in der Publikation "Multicolor 3D MINFLUX nanoscopy of mitochondrial MICOS proteins" (Pape et al., Proceedings of the National Academy of Sciences of the USA, 117(34), 20607-20614. (2020), doi:10.1073/pnas.2009364117) wird die Bildgebung an einer mit zwei verschiedenen Farbstoffen gefärbten Probe mittels MINFLUX beschrieben. Hierbei werden jeweils einzelne Emitter einmal oder insgesamt mehrmals lokalisiert, die Lokalisationen werden jeweils einem der Farbstoffe zugeordnet und im Rahmen einer Cluster-Analyse werden verschiedene Lokalisationen ein und desselben Emitters einander zugeordnet.

In der Publikation "MINFLUX nanoscopy delivers 3D multicolor nanometer resolution in cells" (Gwosch et al., Nat Methods 17, 217-224 (2020). https://doi.org/10.1038/s41592-019-0688-0) wird ebenfalls eine Bildgebung an einer mit zwei verschiedenen Farbstoffen gefärbten Probe mittels MINFLUX beschrieben. Für die Bildgebung werden Fluorophore genutzt, die mittels einer gemeinsamen Anregungswellenlänge angeregt werden können und messbar unterschiedliche spektrale Emissionsspektren aufweisen. Die Fluorophore werden jeweils, unmittelbar bevor sie lokalisiert werden, mit Aktivierungslicht einzeln aktiviert. Die MINFLUX-Messungen werden nun derart durchgeführt, dass die Fluoreszenzemission mittels eines dichroitischen Strahlteilers spektral aufgeteilt wird und die Fluoreszenzemission in jedem der beiden Spektralkanäle separat detektiert wird. Anhand des Summensignales werden Emitter lokalisiert, wobei als Schätzer ein modified least mean square estimator (mLMSE) (siehe in oben zitierter Publikation "Nanometer resolution imaging and tracking of fluorescent molecules with minimal photon fluxes") verwendet wird. Mittels dieses Schätzers wird jeweils die Position eines einzelnen Fluorophors geschätzt. Im Rahmen einer nachträglichen Datenanalyse, die eine erste Zuordnung anhand der Anzahlen der jeweils in den einzelnen Kanälen detektierten Photonen und anschließend eine Hauptkomponentenanalyse zur Verfeinerung der Zuordnung umfasst, werden die Lokalisationen jeweils einzelnen Farbstoffen zugeordnet. Diese Art der Bildaufnahme ist im einleitenden Teil der Publikation bezeichnet als "simultaneous two-color registration". Ausblickend wird unter anderem vorgeschlagen, die Messzeit zu reduzieren, indem im Rahmen einer Lokalisationsprozedur mehrere Moleküle lokalisiert werden, allerdings ohne hierzu Näheres anzugeben.

In der internationalen Patentoffenlegungsschrift WO 2021/122407 A1 wird ein Verfahren zur Verbesserung von Lokalisationen nach einem MINFLUX-Verfahren, indem während der Messung auftretende Störungen erfasst und berücksichtig werden, geoffenbart. Ein entsprechendes Mikroskop wird beschrieben. Mit dem Verfahren soll einerseits auch eine Trajektorie eines Fluoreszenzfarbstoffmoleküls bestimmt werden, das heißt, soll ein Molekül verfolgt werden, und andererseits sollen die Orte mehrerer unterschiedlicher Farbstoffmoleküle bestimmt werden. Ein Mikroskop weist zwei Anregungslaser unterschiedlicher Wellenlänge auf. Die Lichtpfade beider Laser durchlaufen gemeinsam eine Ablenkvorrichtung mit zwei elektrooptischen Deflektoren (EOD), werden anschließend getrennt, in jedem einzelnen Pfad befindet sich ein Flüssigkristallmodulator (spatial light modulator, SLM), um nach der Fokussierung durch ein Objektiv im gemeinsamen Strahlengang in der Probe eine Lichtverteilung im Anregungsfokus mit einem lokalen Intensitätsminimum auszubilden. Neben weiteren Komponenten enthält das Mikroskop einen Strahlteiler zur Aufspaltung des Fluoreszenzlichts in zwei spektral getrennte Detektionskanäle entsprechend der Emissionsbereiche zweier verschiedener Farbstoffe. Im Hinblick auf die Bildgebung in mehreren Farben wird einerseits auf Techniken, die aus der PALM- und STORM-Mikroskopie bekannt sind, verwiesen, und andererseits wird erwähnt, dass mit Hilfe entsprechender Beleuchtungs- und Detektionsmittel dann, wenn Fluoreszenzfarbstoffmoleküle im Abstand größer als die Beugungsgrenze vorliegen, auch eine gleichzeitige oder quasi-gleichzeitige Ortsbestimmung mehrerer Fluoreszenzfarbstoffmoleküle möglich sei. Nähere Ausführungen hierzu werden nicht gemacht. Eine simultane Ortsbestimmung der Orte mehrerer Fluorophore, die weniger als das Beugungslimit voneinander beabstandet sind, wird nicht geoffenbart.

In der internationalen Patentoffenlegungsschrift WO 2022/136361 A1 wird ein Verfahren beschrieben, bei dem die Verfolgung von Partikeln auf solche Bereiche in der Probe beschränkt wird, in denen aus der Verfolgung der Partikel relevante Informationen über die Probe erhalten werden. Um dies zu ermöglichen, wird in der Probe eine zweite Messgröße, die auch eine Fluoreszenzintensität sein kann, erfasst. Die Verfolgung eines betreffenden Partikels wird dann unterbrochen oder beendet, wenn ein aus der zweiten Messgröße bestimmter Kontrollwert ein Abbruchkriterium erfüllt.

In der internationalen Patentoffenlegungsschrift WO 2021/239679 A1 werden ein Verfahren zur simultanen Lokalisation mehrerer Fluorophore und zum simultanen Verfolgen der Bewegungen mehrerer Fluorophore nach einem MINFLUX-Verfahren und eine für die Durchführung des Verfahrens ausgebildete Vorrichtung beschrieben. Die zu lokalisierenden Fluorophore weisen dabei untereinander Abstände auf, die deutlich größer sind als das Beugungslimit. Im Zusammenhang mit Angaben zu einer Kamera zur Erfassung des Fluoreszenzlichts wird darauf hingewiesen, dass auch die Nutzung mehrerer Wellenlängen in Betracht gezogen werden könne. Nähere diesbezügliche Ausführungen werden nicht gemacht.

In der internationalen Patentoffenlegungsschrift WO 2022/079265 A1 werden Verfahren, insbesondere MINFLUX-Verfahren und MINFLUX-ähnliche Verfahren, bei denen eine Verlagerung einer Intensitätsverteilung eines Fluoreszenzverhinderungslichts mit einem zentralen Minimum an die Stelle der Verlagerung eines entsprechenden Anregungslichts tritt, zur lokalisationsmikroskopischen Untersuchung einer mit mehreren Farbstoffen gefärbten Probe und ein zur Durchführung eines der Verfahren eingerichtetes Mikroskop beschrieben. Alle Verfahren sind darauf gerichtet, eine nanoskopische Abbildung in den räumlichen Kontext mikroskopischer Abbildungen zu setzen oder ein nanoskopisches Verfolgen einzelner Moleküle im räumlichen Kontext einer mikroskopischen Abbildung durchzuführen. Hierfür werden Verfahren vorgeschlagen, in denen mehrere Detektionskanäle, ggf. sequenziell, und in vielen Fällen auch mehrere Anregungswellenlängen genutzt werden. Bestimmte Verfahren sollen eine optimierte ratiometrische Trennung der Farbstoffe, zum Beispiel wie sie in der oben genannten Publikation "MINFLUX nanoscopy delivers 3D multicolor nanometer resolution in cells" beschrieben ist, ermöglichen. Ein simultanes Lokalisieren oder Verfolgen mehrerer Fluorophore wird nicht beschrieben.

In der Publikation "Two-photon MINFLUX with doubled localization precision" (Zhao, K. et al., eLight 2, 5 (2022). https://doi.org/10.1186/s43593-021-00011-x) wird Theorie zur Lokalisierung gemäß MINFLUX-Verfahren unter Nutzung einer Zweiphotonen-Anregung beschrieben. Es wird darauf hingewiesen, dass es verschiedene Fluorophore gebe, die mit ein und derselben Anregungswellenlänge mittels Zweiphotonenprozessen anregbar seien und die leicht vollständig trennbare Emissionsspektren aufwiesen. Die ermögliche unter anderem das simultane Verfolgen mehrerer Fluorophore, was wesentlich sei für die Untersuchung von molekularen Wechselwirkungen, zum Beispiel Protein-Protein-Wechselwirkungen, Protein-Nukleinsäure-Wechselwirkungen oder Virus-Zell-Wechselwirkungen.

In der Offenlegungsschrift US 2022/163440 A1 werden Verfahren und Vorrichtungen zur nanoskopischen Untersuchung auf Basis der Beobachtung einzelner Moleküle in insbesondere biologischen Proben beschrieben. Bei der Durchführung der Untersuchung wird ein Target im Bereich einer lokalen Nullstelle einer fokussierten Intensitätsverteilung gehalten, indem die Probe relativ zu dieser Intensitätsverteilung derart bewegt wird, dass eine Bewegung des Targets in der Probe kompensiert wird. Für die Kompensation wird eine zeitliche Auflösung von etwa 10 ms als mehr als ausreichend angegeben. Gleichzeitig wird auf diese Weise die Bewegung des Targets in der Probe verfolgt. In mehreren Ausführungsformen ist die Intensitätsverteilung, in deren Nullstelle das Target gehalten wird, die eines Fluoreszenzverhinderungslichts. In anderen Ausführungsformen ist sie eine Intensitätsverteilung eines Tracking-Beams einer Wellenlänge von 488 nm, der für eine Lokalisation des Targets mittels MINFLUX genutzt wird. Diese Lokalisation kann mit einer höheren zeitlichen Auflösung als die oben genannte erfolgen, sodass die Bewegung des Targets auch in dieser höheren zeitlichen Auflösung verfolgt werden kann. Auch in Fällen, in denen das Target im Bereich einer lokalen Nullstelle einer fokussierten Intensitätsverteilung von Fluoreszenzverhinderungslicht gehalten wird, kann die Lokalisierung, auf Basis derer die Kompensation der Bewegung erfolgt, mittels MINFLUX erfolgen. In den Fällen, in denen eine Lokalisierung mittels MINFLUX erfolgt, wird diese Lokalisation nun entweder genutzt, um das Target im Bereich einer lokalen Nullstelle einer fokussierten Intensitätsverteilung von Fluoreszenzverhinderungslicht oder aber sowohl im Bereich einer lokalen Nullstelle des Tracking-Beams als auch im Bereich eines zentralen Maximums einer Intensitätsverteilung von Anregungslicht zu halten. Es wird nun einerseits das Target verfolgt und andererseits werden im Nahbereich um das Target unter Nutzung von Anregungslicht mehrerer Wellenlängen weitere Einzelmolekülereignisse detektiert, sodass beispielsweise erkannt wird, in welcher zeitlichen Abfolge sich verschiedene fluoreszierende Proben (fluoreszenzmarkierte Bio-Moleküle) an das Target anlagern. Der Tracking-Beam selbst kann schnell mittels elektrooptischer Deflektoren verlagert werden, die Verlagerung der anderen Intensitätsverteilungen gegenüber der Probe erfolgt deutlich langsamer mittels eines Nanopositioniertisches. Die Bewegung zweier Fluorophore gegeneinander wird mit dem Verfahren nicht beobachtet.

In der Publikation "MINFLUX nanometer-scale 3D imaging and microsecond-range tracking on a common fluorescence microscope" (Schmidt, R. et al., Nat Commun 12, 1478 (2021). https://doi.org/10.1038/s41467-021-21652-z) wird einerseits ein MINFLUX-Verfahren zum Verfolgen schneller Bewegungen mit einer zeitlichen Auflösung von etwa 100 µs bei einer örtlichen Auflösung von besser als 20 nm beschrieben und andererseits wird die 3D-MINFLUX-Bildaufnahme mit Auflösungen im Bereich weniger Nanometer beschrieben, beides jeweils in einer Farbe. Sowohl das Verfolgen von Partikeln als auch die 3D-MINFLUX-Bildaufnahmen erfolgen mit einem kommerziell verfügbaren Mikroskop. Die hohe Auflösung wird ermöglicht zum einen durch eine aktive Stabilisierung der Probe. Zum anderen erfolgt bereits während der Datenaufnahme eine Korrektur hinsichtlich des Hintergrunds, wodurch die Schätzung der jeweiligen Position der Fluorophore in Echtzeit und damit die Datenaufnahme insgesamt optimiert wird. Die Anregung eines Fluorophors für dessen MINFLUX-Lokalisation erfolgt jeweils mittels eines cw-Lasers mit einer Wellenlänge von 642 nm.

In der Publikation "MINFLUX dissects the unimpeded walking of kinesin-1" (Wolff, Jan O. et al., bioRxiv 2022.07.25.501426; doi: https://doi.org/10.1101/2022.07.25.501426) wird ein Verfolgen von Motorproteinen mit hoher raum-zeitlicher Auflösung mittels MINFLUX beschrieben. Dabei werden in einer Variante Motorproteine an zwei Bindestellen jeweils mit einem Fluorophor markiert, wobei die zwei Fluorophore identisch sind. Beide Fluorophore werden simultan mittels eines Paares von Anregungslichtverteilungen verfolgt, dessen eine in dem Beleuchtungsfokus ein in einer y-Richtung ausgedehntes Minimum aufweist und dessen andere ein in einer x-Richtung ausgedehntes Minimum aufweist. Die Verteilungen werden iterativ genutzt, um eine Fluorophorposition zu bestimmen, wobei aus Fluoreszenzmesswerten und zugeordneten Verläufen von Intensitätsanstiegsbereichen jeweils eine neue Position des Fluorophors geschätzt wird. Für jede Positionsbestimmung in einer Raumrichtung werden dabei mindestens zwei Intensitätsverteilungen genutzt. Jede dieser Intensitätsverteilung weist ein Minimum und an das Minimum beiderseits angrenzende Intensitätsanstiegsbereiche auf, die Intensitätsverteilungen unterscheiden sich voneinander hinsichtlich ihrer Form. In einer Nullstellung sind die Intensitätsverteilungen symmetrisch zu einem zentralen Intensitätsminimum. In einer von der Nullstellung abweichenden Stellung ist nun jeweils das zentrale Minimum verlagert und die Symmetrie der Intensitätsverteilung wird gestört, sodass sich die genutzten Intensitätsverteilung nicht nur hinsichtlich der Lage des lokalen Intensitätsminimums, sondern auch hinsichtlich ihrer Form unterscheiden. Bei der Schätzung Position werde inhärent die Lage des Mittelpunkts zwischen den beiden Fluorophoren erhalten.

In der Offenlegungsschrift DE 10 2021 100 564 A1 werden ein Verfahren zur hochaufgelösten Bestimmung der Lage eines anregbaren Fluorophors in drei Raumrichtungen in einer Probe durch Abtasten des anregbaren Fluorophors mit einem 3D-Anregungsdonut und ein entsprechendes Mikroskop geoffenbart. Die DE 10 2021 100 564 A1 offenbart auch ein detailliertes Ablaufschema einer 3D-Lokalisation eines Fluorophors unter Nutzung eines 3D-Donuts. In Zusammenhang mit dieser 3D-Lokalisation wird darauf hingewiesen, dass eine iterative Echtzeitlokalisation auch dann möglich ist, wenn bei dem Auffinden oder während der Lokalisation mehrere Fluorophore im Fokusbereich sind. Dann nämlich werde, wenn beide Fluorophore sehr dicht benachbart sind, eine mittlere Lage erhalten; liegen sie etwas weiter auseinander, dann werde während des Lokalisierens einer der beiden Fluorophore gebleicht, sodass schließlich eine Lokalisation des einen nicht gebleichten Fluorophors erhalte werde. In beiden Fällen wird als Ergebnis des iterativen Prozesses eine einzige Lage erhalten.

Gemäß den Patentschriften EP 2 780 694 B1 und US 9,291,562 B2 soll die Bewegung eines Partikels in der Probe verfolgt werden, indem Licht, das aus dem Bereich eines räumlich begrenzten Minimums einer Anregungsintensitätsverteilung emittiert wird, erfasst wird und indem die Anregungsintensitätsverteilung in der Probe jeweils beispielsweise mittels eines Strahlscanners so verlagert wird, dass die Rate der Photonen, die von dem Partikel emittiert wird, minimal bleibt. Gemäß den Patentschriften soll es möglich sein, zwei Partikel quasi-simultan zu verfolgen, indem alternierend für jedes Partikel einzeln das Verfahren durchgeführt wird. Ebenso soll es möglich sein, simultan mehrere Partikel zu verfolgen, sofern mehrere Strahlformungsmittel und mehrere Strahlablenkmittel vorhanden sind. Auch könnten Strahlquellen verschiedener Wellenlängen für das simultane Verfolgen genutzt werden. Als eine Lösung, wie Sorge getragen wird, dass die Rate der Photonen, die von dem Partikel emittiert wird, minimal bleibt, wird vorgeschlagen, die Intensitätsverteilung jeweils versuchsweise zu verschieben, wenn sich die Rate auf Grund einer Bewegung des Partikels erhöht hat. Das Partikel könne auf diese Weise verfolgt werden, weil eine minimale Rate gerade nur dann erreicht werde, wenn die Intensitätsverteilung in Richtung der Bewegung des Partikels verlagert worden sei. Alternativ sei es auch möglich, die Bewegung mittels einer Kamera zu beobachten und den Strahl der so bestimmten Bewegung entsprechend nachzuführen, bis die Rate der Photonen, also die im Kamerabild dem Partikel zugeordnete gemessene Helligkeit, minimal ist.

Dieses Verfahren hat den grundsätzlichen Nachteil, dass ein Verfolgen schnell bewegter fluoreszierender Partikel mit hoher örtlicher Auflösung kaum möglich ist. Wenn nämlich durch versuchsweise Verlagerung der Intensitätsverteilung die Rate der Photonen minimal gehalten werden soll, so muss diese versuchsweise Verlagerung, während der eine Bestimmung der Rate der Photonen derart erfolgen soll, dass erkannt wird, an welcher Position sie minimal ist, mit einer Geschwindigkeit erfolgen, die gegenüber der Bewegungsgeschwindigkeit des Partikels groß ist. Dies schließt aus, dass schnell bewegte Partikel sicher mit hoher örtlicher Auflösung verfolgt werden. Sollen zwei Partikel, die sich in einem Abstand zueinander von weniger als dem Beugungslimit befinden, simultan oder quasi-simultan verfolgt werden, tritt zusätzlich das Problem auf, dass die Raten der Photonen für die beiden Partikel nur dann unabhängig voneinander minimal gehalten werden könnten, wenn ein Übersprechen der Fluoreszenz des einen Fluorophors in den Detektionskanal des jeweils anderen Fluorophors vollständig, also nicht nur näherungsweise, ausgeschlossen wird.

### Aufgabe der Erfindung

Es ist nun eine Aufgabe der Erfindung, Lösungen bereitzustellen, die ein simultanes Verfolgen zweier optisch unterscheidbarer Licht emittierender Partikel oder Licht emittierender Einheiten, die eng benachbart sind, mit hoher räumlicher und zeitlicher Auflösung ermöglichen.

### Lösung

Diese Aufgabe wird durch ein Verfahren gemäß Anspruch 1 und durch eine Vorrichtung gemäß Anspruch 15 gelöst. Die Ansprüche 1 und 15 definieren die vorliegende Erfindung.

Vorteilhafte Ausführungsformen des erfindungsgemäßen Verfahrens sind in den Unteransprüchen 2 bis 14 angegeben. Diese und weitere vorteilhafte Ausgestaltungen werden im Folgenden beschrieben.

### Definitionen

Unter Emitter werden in dieser Anmeldung Objekte verstanden, die, wenn sie mit Anregungslicht beleuchtet werden, mit Blick auf die erfindungsgemäßen Messungen als Punktlichtquellen betrachtet werden können. Das von dem Objekt, das als Punktquelle wirkt, ausgehende Licht kann beispielsweise Streulicht sein, das aus einer elastischen Streuung wie beispielsweise einer Rayleigh-Streuung oder einer inelastischen Streuung wie beispielsweise einer Raman-Streuung resultiert oder es kann Lumineszenzlicht, insbesondere Fluoreszenzlicht sein. Wesentlich für einen Emitter ist, dass von ihm als Reaktion auf das Beleuchten sofort oder mit kleiner Zeitverzögerung Licht ausgeht. Hierbei steht die maximale Zeitverzögerung in einer Beziehung zu der zeitlichen Auflösung, mit der die Bewegungen der Licht emittierenden Partikel oder Licht emittierenden Einheiten verfolgt werden sollen, und mit der Geschwindigkeit, mit der sich die Partikel oder Einheiten in der Probe bewegen. Die Zeitverzögerungen können bis etwa 10 µs betragen, liegen in der Regel aber im Bereich bis zu einigen zehn Nanosekunden, häufig im Bereich von 1 bis 10 ns und, wenn die Emission Streulicht ist, bei Null. In dieser Anmeldung dient der Begriff Fluoreszenzemitter der Bezeichnung von Emittern, die als Fluoreszenzpunktlichtquellen wirken. Emitter können beispielsweise metallische Nanopartikel sein. Unter den spezielleren Begriff Fluoreszenzemitter fallen zum Beispiel einzelne Fluoreszenzfarbstoffmoleküle oder deren fluoreszierende chemische Gruppen. Solche Emitter und insbesondere solche Farbstoffe können an Biomoleküle ankoppeln, die sie dann markieren. Es ist auch möglich, dass mehrere streuende Emitter oder Farbstoffmoleküle an eine zu markierende Struktur, zum Beispiel an ein Biomolekül oder eine biologische Mikrostruktur, ankoppeln. In diesem Fall sind zwei Fälle zu unterscheiden. Binden mehrere optisch nicht unterscheidbare oder nicht zu unterscheidende Emitter wie zum Beispiel mehrere identische Farbstoffmoleküle in unmittelbarer Nachbarschaft, beispielsweise innerhalb von 1 nm oder wenigen Nanometern zueinander an die Struktur, so können sie gemeinsam als ein Emitter betrachtet werden. Dasselbe gilt, wenn eine kleine, mit mehreren nicht unterscheidbaren Emittern, zum Beispiel mit identischen Fluorophoren, versehene Struktur an eine zu markierende Zielstruktur angekoppelt ist. Im anderen Fall dienen optisch unterscheidbare Emitter wie zum Beispiel unterschiedliche Farbstoffe zur Markierung unterschiedlicher Bereiche einer Struktur, zum Beispiel eines Biomoleküls wie zum Beispiel eines Motorproteins. Die unterschiedlichen Bereiche können dabei sehr kleine Abstände zueinander im Bereich weniger Nanometer aufweisen, wobei die Ausdehnung der einzelnen Emitter kleiner sein sollte als diese Abstände. Auch hier können an jeder der zu unterscheidenden Stellen der Struktur auch wieder mehre Fluorophore, das heißt, fluoreszierende Moleküle oder fluoreszierende Gruppen betreffender Moleküle, eine fluoreszierende Einheit darstellen und somit gemeinsam einen Emitter bilden oder mehrere streuende Objekte gemeinsam einen streuenden Emitter bilden. Anstelle von Farbstoffen können auch andere fluoreszierende Einheiten wie zum Beispiel Quantum Dots (siehe unter Stand der Technik: "Differential Labeling of Myosin V Heads with Quantum Dots Allows Direct Visualization of Hand-Over-Hand Processivity") oder aufwärtskonvertierende Nanopartikel zur Markierung verwendet werden.

Im Kontext der Anmeldung wird dementsprechend unter Anregungslicht nicht nur Fluoreszenzanregungslicht verstanden, sondern allgemein solches Licht, das bewirkt, dass von einem Emitter Licht ausgeht.

Unter STED-Licht wird in dieser Anmeldung, wie allgemein üblich, solches Licht verstanden, das durch die Anregung von stimulierter Emission Fluoreszenzemission unterdrückt. STED-Licht ist im Rahmen dieser Anmeldung eine spezielle Form des Emissionsunterdrückungslichts.

Unter MINFLUX-Verfahren werden in dieser Anmeldung Verfahren zur Lokalisation von Emittern unter mehrmaliger Nutzung von Intensitätsverteilungen eines Anregungslichtes in einer Probe mit einem Minimum und an das Minimum angrenzenden Intensitätsanstiegsbereichen verstanden, wobei aus mehreren verschiedenen Verläufen von Intensitätsanstiegsbereichen über einen Emitter und den Verläufen zugeordneten Messwerten der Emission auf den Ort des Emitters geschlossen wird. Verschiedene Verläufe von an das Minimum angrenzenden Intensitätsanstiegsbereichen über einen Emitter können beispielsweise erhalten werden, indem das Minimum einer bestimmten Intensitätsverteilung an verschiedenen Positionen platziert wird, derart dass der Emitter jeweils an verschiedenen Stellen relativ zum Minimum jeweils innerhalb eines Intensitätsanstiegsbereichs liegt. Verschiedene Verläufe von Intensitätsanstiegsbereichen können auch erhalten werden, indem verschiedene Intensitätsverteilungen mit einem Minimum und an das Minimum angrenzenden Intensitätsanstiegsbereichen in der Probe platziert werden, derart dass der Emitter jeweils in einem Intensitätsanstiegsbereich liegt. Verschiedene Verläufe von Intensitätsanstiegsbereichen können auch erhalten werden, indem beide Maßnahmen, das Platzieren des Minimums an verschiedene Positionen und das Verwenden mehrerer verschiedener Intensitätsverteilungen kombiniert werden.

Verfahren zur Lokalisation von Emittern unter Nutzung eines lokalen Minimums einer Intensitätsverteilung eines Anregungslichtes, wobei aus mehreren Positionen des lokalen Minimums und den Positionen zugeordneten Messwerten der Emission auf den Ort des Emitters geschlossen wird, gehören demnach zu den MINFLUX-Verfahren. Hierbei können sich die Intensitätsverteilungen zwischen den Positionen, an die jeweils das Minimum positioniert wird, voneinander unterscheiden. Dabei bedeutet die Formulierung "unter Nutzung eines lokalen Minimums", dass das Minimum in jeder Dimension, in der der Ort des Emitters bestimmt werden soll, an mehreren solchen Positionen positioniert wird, für die die Bedingung erfüllt ist, dass sich der Emitter in einem an das lokale Minimum angrenzenden Intensitätsanstiegsbereich befindet. Dabei ist nicht ausgeschlossen, dass das Minimum zusätzlich auch an solchen Positionen platziert wird, für die die hier oberhalb genannte Bedingung nicht erfüllt ist.

Unter STED-MINFLUX-Verfahren werden in dieser Anmeldung den MINFLUX-Verfahren entsprechend obiger Definition entsprechende Verfahren mit der Abweichung, dass an Stelle der Intensitätsverteilung von Anregungslicht eine Intensitätsverteilung von Emissionsunterdrückungslicht, die mit Anregungslicht überlappt, tritt, verstanden.

Dass die Intensitätsverteilung von Emissionsunterdrückungslicht mit Anregungslicht überlappt, bedeutet dabei, dass die Probe in dem Bereich des Intensitätsminimums und der angrenzenden Abschnitte der Intensitätsanstiegsbereiche des Emissionsunterdrückungslichts, innerhalb der ein Emitter liegt, derart mit Anregungslicht beaufschlagt wird, dass eine Emission des Emitters angeregt wird oder in Abwesenheit von Emissionsunterdrückungslicht angeregt werden würde, sodass sich das Emissionsunterdrückungslicht entsprechend seiner Intensitätsverteilung derart auf die angeregte Emission oder das Anregen der Emission auswirkt, dass eine gemessene Emission eines innerhalb der Intensitätsverteilung des Emissionsunterdrückungslichts gelegenen Emitters mit zunehmendem Abstand vom Intensitätsminimum abnimmt. Wenn das Emissionsunterdrückungslicht STED-Licht und der Emitter ein Fluoreszenzemitter ist, bedeutet das, dass die spontane Emission des Fluoreszenzemitters mit zunehmendem Abstand vom Intensitätsminimum des STED-Lichts abnimmt. Die stimulierte Emission des Emitters, die dieselbe Wellenlänge wie das STED-Licht aufweist, trägt, wie in der STED-Mikroskopie üblich, nicht zur gemessenen Emission bei, sie wird beispielsweise mittels eines Filters geblockt. Dass die Intensitätsverteilung von Emissionsunterdrückungslicht mit Anregungslicht überlappt, bedeutet dabei nicht, dass das Anregungslicht und das Emissionsunterdrückungslicht streng gleichzeitig in die Probe eingebracht werden. So ist es zum Beispiel möglich, wie in der STED-Mikroskopie üblich, dass ein kurzer Puls von Anregungslicht angewendet wird, dem ein Puls von STED-Licht als Emissionsunterdrückungslicht unmittelbar nachfolgt. Das Anregungslicht, mit dem die Intensitätsverteilung von Emissionsunterdrückungslicht überlappt, kann beispielsweise eine Intensitätsverteilung aufweisen, wie sie in der konfokalen Mikroskopie üblich ist, also zumindest näherungsweise einer Airyfunktion oder einer Gaußfunktion entsprechen, wobei deren zentrales Maximum mit dem Minimum des Emissionsunterdrückungslichts zusammenfallen kann. Sie kann auch einer Tophat-Funktion entsprechen. Auch eine konstante Anregung im Weitfeld ist möglich.

Der Begriff STED-MINFLUX wird in einem verallgemeinerten Sinn verwendet, er soll keinesfalls so verstanden werden, als dass das Emissionsunterdrückungslicht STED-Licht sein muss.

Dass zwei Emitter eng benachbart sind, bedeutet, dass die Emitter voneinander einen Abstand aufweisen, in dem bei einer Durchführung eines MINFLUX-Verfahrens an dem einen der Emitter zwingend der andere der Emitter in den Einflussbereich des Anregungslichts gelangt oder bei Durchführung eines STED-MINFLUX-Verfahrens an dem einen der Emitter zwingend der andere der Emitter in den Einflussbereich des Emissionsunterdrückungslichts gelangt, sodass bei einer simultanen Lokalisation beider Emitter die Lokalisationen nicht auf Grund des Abstands als voneinander unabhängig betrachtet werden können. Zwei Emitter sind insbesondere dann eng benachbart, wenn ihr Abstand zueinander kleiner als ein Abstand der dem Maximum nächst benachbarten Nullstellen einer mit der größten Wellenlänge des bei Durchführung des Verfahrens verwendeten Lichts und der numerischen Apertur der Fokussierung korrespondierenden Airyfunktion, kurz als kleiner als ein Airydurchmesser bezeichnet, ist. Ist der Abstand in diesen Fällen kleiner als ein halber Airydurchmesser, werden die Emitter auch als sehr eng benachbart bezeichnet. In Fällen, in denen die Intensitätsverteilungen ohne eine fokussierende Optik erzeugt werden, sind insbesondere Emitter mit einem Abstand, der kleiner als die längste Wellenlänge des verwendeten Lichts sind, eng benachbart. Ist in einem solchen Fall der Abstand der Emitter kleiner als die Hälfte der längsten verwendeten Wellenlänge, werden die Emitter auch als sehr eng benachbart bezeichnet.

Im Kontext der Anmeldung werden Emitter, bei denen es möglich ist, Emissionen auch dann dem einen oder dem anderen Emitter zuzuordnen, wenn sich beide Emitter in unmittelbarer Nachbarschaft zueinander befänden, als optisch voneinander unterscheidbare Emitter bezeichnet. Die Zuordnungsmöglichkeit kann dabei beispielsweise auf unterschiedlichen optischen Eigenschaften zum Beispiel hinsichtlich der Anregbarkeit von Emissionen oder alternativ oder zusätzlich auf unterschiedlichen Eigenschaften der Emissionen der Emitter beruhen. Hierbei muss hinsichtlich der Zuordnung keine vollständige Sicherheit bestehen können. Einzelne Emitter, deren Emissionen, wenn sich beide Emitter in unmittelbarer Nachbarschaft zueinander befänden, nicht einem bestimmten der beiden Emitter zugeordnet werden könnten, werden dementsprechend als nicht optisch voneinander unterscheidbar bezeichnet.

Im Kontext der Anmeldung wird ein Emitter dann als vereinzelt bezeichnet, wenn ein Abstand zu einem nächstbenachbarten Emitter, von dem er optisch nicht unterscheidbar ist, zumindest so groß ist wie ein Abstand entsprechend dem Auflösungsvermögen der optischen Anordnung, mit der die Emissionen bei Durchführung des Verfahrens detektiert werden.

Unter einem 3D-Minimum wird in dieser Anmeldung ein Minimum verstanden, das in allen Raumrichtungen von Intensitätsanstiegsbereichen umgeben ist. Ein 3D-Minimum kann beispielsweise durch Überlagerung zweier Lichtstrahlen, wobei jeweils in einer Pupille die Wellenfront des einen der beiden mittels einer sogenannten annular phase plate und die des anderen mittels einer Vortex-Phasenplatte in der Phase moduliert wird, erhalten werden.

Unter einem 2D-Minimum wird in dieser Anmeldung ein Minimum verstanden, das in allen Raumrichtungen innerhalb einer gegebenen Ebene von Intensitätsanstiegsbereichen umgeben ist und sich entlang einer Achse senkrecht zu dieser Ebene erstreckt. Ein 2D-Minimum kann beispielsweise mittels einer Vortex-Phasenplatte im Strahlengang erhalten werden. Das Minimum erstreckt sich beispielsweise entlang der optischen Achse eines Objektivs, während es in Richtungen senkrecht zur optischen Achse von Intensitätsanstiegsbereichen umgeben ist. Grundsätzlich kann die Ebene, innerhalb der sich die Intensitätsanstiegsbereiche erstrecken aber auch eine andere Orientierung im Raum aufweisen.

Unter einem 1D-Minimum wird in dieser Anmeldung ein Minimum verstanden, das in einer Raumrichtung senkrecht zu einer gegebenen Ebene von Intensitätsanstiegsbereichen umgeben ist. Ein solches Minimum kann beispielsweise mittels einer Phasenverzögerungsplatte, die insbesondere in einer Pupille eine Hälfte einer Wellenfront gegenüber der anderen Hälfte der Wellenfront um λ/2 verzögert, wobei die Halbierung der Wellenfront entlang einer geraden Linie erfolgt. Eine alternative Methode zur Erzeugung von 1D-Minima, die hier als weiteres Beispiel genannt wird, wird in der als Stand der Technik genannten Publikation "MINFLUX dissects the unimpeded walking of kinesin-1" (Wolff et al.) beschrieben.

### Beschreibung der Erfindung

Die Erfindung betrifft ein Verfahren zum simultanen Verfolgen der Bewegung eines ersten und vom ersten optisch unterscheidbaren zweiten Emitters, die eng benachbart sind, in einer Probe mittels eines MINFLUX-Verfahrens oder eines STED-MINFLUX-Verfahrens.

Erfindungsgemäß wird ein Beleuchtungs- und Messschritt durchgeführt, bei dem die Probe mit Intensitätsverteilungen von Anregungslicht oder von Emissionsunterdrückungslicht, insbesondere von STED-Licht, überlappend mit Anregungslicht, die in einem Messbereich ein lokales Minimum und an das Minimum angrenzende Intensitätsanstiegsbereiche aufweisen, beleuchtet wird, wobei in einer zeitlichen Abfolge verschiedene Verläufe von Intensitätsanstiegsbereichen eines vorbestimmten Satzes von Verläufen von Intensitätsanstiegsbereichen in einem vermuteten Ortsbereich zumindest des ersten Emitters erzeugt werden. Weiter werden in dem Beleuchtungs- und Messschritt Emissionen des ersten Emitters und optional des zweiten Emitters gemessen und es werden Messwerte der Emission den jeweiligen Verläufen von Intensitätsanstiegsbereichen zugeordnet.

Weiter wird erfindungsgemäß ein Ortsbestimmungsschritt durchgeführt. Bei diesem wird auf Basis der verschiedenen Verläufe von Intensitätsanstiegsbereichen und der zugeordneten Messwerte der Emission ein Ort des ersten Emitters bestimmt oder es werden Orte des ersten und des zweiten Emitters bestimmt oder es wird ein gemeinsamer mittlerer Ort beider Emitter bestimmt.

Ein solches Verfahren, bei dem Orte zweier eng benachbarter Emitter, konkret zweier Fluorophore, bestimmt werden, ist grundsätzlich aus der Dissertation von Jasmin Pape, auf die im Abschnitt zum Stand der Technik eingegangen wurde, bekannt. In der Dissertation werden aber bezüglich der simultanen Messung an mehreren Fluorophoren ausschließlich Daten zu ruhenden Objekten gezeigt. Die Ortsbestimmungen erfolgen im Rahmen einer Auswertung nach Abschluss der Messungen.

Demgegenüber erfolgt im Rahmen der Erfindung der Ortsbestimmungsschritt bereits während der Dauer der Datenaufnahme, was ein Verfolgen mobiler Emitter über Strecken, die größer als eine Ausdehnung des während eines Beleuchtungs- und Messschritts erfassten Bereichs sind, ermöglicht. Auf Basis entweder des im Ortsbestimmungsschritt bestimmten Orts des ersten Emitters oder im Ortsbestimmungsschritt bestimmten Orte beider Emitter oder des im Ortsbestimmungsschritt bestimmten gemeinsamen mittleren Orts beider Emitter wird erfindungsgemäß für jeden der Emitter ein jeweiliger neuer vermuteter Ortsbereich und insgesamt ein neuer Satz von Verläufen bestimmt. Weiter werden erfindungsgemäß der Beleuchtungs- und Messschritt und der Ortsbestimmungsschritt unter Verwendung des neuen Satzes von Verläufen wiederholt.

Erfindungsgemäß umfasst das Anregungslicht erstes Anregungslicht zur Anregung des ersten Emitters und zweites Anregungslicht zur Anregung des zweiten Emitters, das heißt, beide Emitter werden erfindungsgemäß durch Anregungslicht angeregt. Dies gilt sowohl in dem Fall, dass das Anregungslicht in dem Messbereich die das lokales Minimum aufweisende Intensitätsverteilung ausbildet, als auch in dem Fall, dass ein Emissionsunterdrückungslicht im Messbereich die das lokale Minimum aufweisende Intensitätsverteilung ausbildet und das Anregungslicht mit dieser Intensitätsverteilung überlappt. Grundsätzlich kann das erste Anregungslicht mit dem zweiten Anregungslicht identisch sein. Dies hat den Vorteil, dass keine von der Anregung abhängenden Ortsabweichungen auftreten können. Insbesondere wenn das Anregungslicht die das lokale Minimum aufweisende Intensitätsverteilung, insbesondere als fokussierte Intensitätsverteilung, ausbildet kann dieser Vorteil relevant sein. Sind das erste und das zweite Anregungslicht dagegen nicht identisch, kann es bevorzugt sein, dass das erste und das zweite Anregungslicht in einem gemeinsamen Strahlengang geführt werden oder beispielsweise beide Anregungslichte in einem Abschnitt in einer gemeinsamen Faser geführt werden. Diese Maßnahmen dienen dem Zweck, dass die Intensitätsverteilungen beider Anregungslichte in der Probe optimal zueinander justiert sind. Die Strahlengänge können bevorzugt "aligned by design" - dieser Begriff ist im Zusammenhang mit der STED-Mikroskopie bzgl. einer Justierung des STED-Lichts zum Anregungslicht üblich - sein.

Dass die Bewegungen eines ersten und eines zweiten Emitters, die eng benachbart sind, in einer Probe mittels eines MINFLUX-Verfahrens oder eines STED-MINFLUX-Verfahrens verfolgt werden, bedeutet nicht, dass für jeden einzelnen der Emitter ein MINFLUX -oder ein STED-MINFLUX-Verfahren gemäß den oben angegebenen Definitionen durchgeführt werden muss. Vielmehr muss lediglich überhaupt ein MINFLUX- oder ein STED-MINFLUX-Verfahren mit Bezug auf zumindest einen der Emitter durchgeführt werden und mittels des Verfahrens müssen die Bewegungen beider Emitter verfolgt werden. Bevorzugt wird zumindest mit Bezug auf den ersten Emitter ein MINFLUX- oder ein STED-MINFLUX-Verfahren durchgeführt.

Dass die Bewegungen eng benachbarter Emitter verfolgt werden, schließt nicht aus, dass vor oder nach dem Verfolgen der Bewegungen mittels des erfindungsgemäßen Verfahrens dieselben Emitter nicht eng benachbart sind, deren Bewegungen aber dennoch simultan verfolgt werden. Es schließt auch nicht aus, dass vor oder nach dem Verfolgen der Bewegungen mittels des erfindungsgemäßen Verfahrens lediglich die Bewegung eines der beiden Emitter verfolgt wird, bis dieser sich dem anderen eng angenähert hat oder nachdem dieser sich von dem anderen entfernt hat.

In bevorzugten Ausführungsformen sind das erste und das zweite Anregungslicht hinsichtlich ihrer spektralen Zusammensetzung unterschiedlich. Die Verwendung voneinander unterschiedlicher Anregungslichte ist ein Mittel, um eine optische Trennung der beiden Emitter voneinander zu erreichen. Beispielweise kann das erste Anregungslicht einen ersten Spektralbereich umfassen und das zweite Anregungslicht einen zweiten Spektralbereich umfassen, der sich von dem ersten Spektralbereich unterscheidet, bevorzugt sich mit dem ersten Spektralbereich nicht überdeckt. Sowohl das erste Anregungslicht als auch das zweite Anregungslicht kann bevorzugt schmalbandiges Licht sein, bevorzugt Laserlicht, zum Beispiel mit einer Bandbreite kleiner als 10 nm oder kleiner als 5 nm oder kleiner als 1 nm oder kleiner als 0,1 nm; sowohl das erste Anregungslicht als auch das zweite Anregungslicht kann schmalbandiges oder monochromatisches Laserlicht sein. In bevorzugten Ausführungsformen der Erfindung kann ein Abstand der Spektralbereiche oder der Wellenlängen mehr als 50 nm, mehr als 100 nm, mehr als 150 nm oder mehr als 200 nm betragen. Die Verwendung spektral unterschiedlicher Anregungslichte ermöglicht beispielsweise die Nutzung von Emittern wie zum Beispiel Fluorophoren mit sich stark unterscheidenden Anregungsspektren. Dies wiederum ermöglicht eine jeweils weitgehend separate Anregung des ersten und des zweiten Emitters, insbesondere eines ersten und eines zweiten Fluoreszenzemitters, das heißt, eine Anregung mit einer geringen Kreuzanregung, oder sogar eine vollständig separate Anregung eines der Emitter. Unter Kreuzanregung wird hierbei verstanden, dass jeweils das eine Anregungslicht nicht nur, wie erwünscht, den zugehörigen einen Emitter anregt, sondern auch den anderen Emitter. Eine Kreuzanregung ist dann als gering zu bezeichnen, wenn die unerwünschte Anregung im Verhältnis zu der erwünschten Anregung klein ist. Bevorzugt sind die spektralen Zusammensetzungen des ersten Anregungslichts und des zweiten Anregungslichts und der erste und der zweite Emitter daher derart aufeinander abgestimmt, dass eine Anregung des zweiten Emitters durch das erste Anregungslicht im Verhältnis zur Anregung des ersten Emitters durch das erste Anregungslicht minimal ist oder bei gleicher Anregungsintensität höchstens 10%, bevorzugt höchstens 5%, weiter bevorzugt höchstens 1 %, noch weiter bevorzugt höchstens 0,1% der Anregung des ersten Emitters beträgt, und/oder dass entsprechend eine Anregung des ersten Emitters durch das zweite Anregungslicht minimal ist oder bei gleicher Anregungsintensität insbesondere höchstens 5%, bevorzugt höchstens 1 %, weiter bevorzugt höchstens 0,1% der Anregung des zweiten Emitters beträgt. In bevorzugten Ausführungsformen können die spektralen Zusammensetzungen des ersten Anregungslichts und des zweiten Anregungslichts und der erste und der zweite Emitter daher derart aufeinander abgestimmt sein, dass die Kreuzanregung des ersten Emitters durch das zweite Anregungslicht besonders gering ist, während in Kauf genommen wird, dass die Kreuzanregung des zweiten Emitters durch das erste Anregungslicht höher ist. Dies gilt insbesondere für solche Ausführungsformen, bei denen im Ortsbestimmungsschritt ein Ort des ersten Emitters bestimmt wird und auf Basis des im Ortsbestimmungsschritt bestimmten Orts des ersten Emitters für jeden der Emitter ein jeweiliger neuer vermuteter Ortsbereich und insgesamt ein neuer Satz von Verläufen bestimmt wird. Ein jeweiliger vermuteter Ortsbereich kann deswegen auf Basis des im Ortsbestimmungsschritt bestimmten Orts des ersten Emitters erfolgen, weil vorausgesetzt werden kann, dass die Emitter im in dieser Anmeldung definierten Sinn eng benachbart sind. Die enge Nachbarschaft kann darin begründet sein, dass beide Emitter an dieselbe biologische Struktur, beispielsweise an ein Motorprotein angekoppelt sind. Aus der Kenntnis über die Position des ersten Emitters ergibt sich somit eine Kenntnis über die Position des zweiten Emitters, wenn auch im Regelfall eine ungenauere Kenntnis.

In Ausführungsformen, in denen das erste und zweite Anregungslicht hinsichtlich ihrer spektralen Zusammensetzung unterschiedlich sind, kann in dem Beleuchtungs- und Messschritt das Beleuchten mit dem ersten Anregungslicht und das Beleuchten mit dem zweiten Anregungslicht zeitlich getrennt voneinander erfolgen. Dies kann sowohl in einer Weise durchgeführt werden, dass während eines Beleuchtungs- und Messschritts zunächst alle Messdaten zu dem ersten, oder alternativ dem zweiten, Anregungslicht und anschließend alle Messdaten zu dem zweiten, oder alternativ dem ersten, Anregungslicht aufgenommen werden, oder in einer Weise, dass das erste und das zweite Anregungslicht derart im Wechsel, beispielsweise "pulse interleaved", genutzt werden, dass alle zugehörigen Messdaten quasi gleichzeitig aufgenommen werden. In Verbindung mit dem Unterschied hinsichtlich der spektralen Zusammensetzungen der Anregungslichte können die Messwerte der Fluoreszenzemission, die jeweils in einem Beleuchtungs- und Messschritt erfasst werden, nicht nur jeweils der Position, an die das Beleuchtungslicht positioniert ist, oder dem jeweiligen Verlauf des Intensitätsanstiegsbereichs, der in der Probe erzeugt wird, zugeordnet werden, sondern auch dem Emitter, von dem die Emission ausgeht. Eine solche zeitliche Trennung kann beispielsweise mittels optischer Schalter, zum Beispiel mittels akusto-optischer Modulatoren erreicht werden. Diese Schalter können beispielsweise umschalten, Licht welcher von mehreren Lichtquellen in den optischen Pfad zur Beleuchtung des Messbereichs in der Probe eingekoppelt wird oder sie können innerhalb eines optischen Pfads Licht ausblenden oder es aus dem Pfad auskoppeln.

Grundsätzlich kann das erfindungsgemäße Verfahren unter Verwendung zeitlich kontinuierlicher Lichtquellen oder einer zeitlich kontinuierlichen Lichtquelle, zum Beispiel unter Verwendung eines oder mehrerer cw-Laser durchgeführt werden. Wie oberhalb dargelegt, gilt dies auch für Ausführungsformen, bei denen das Beleuchten mit dem ersten Anregungslicht und das Beleuchten mit dem zweiten Anregungslicht zeitlich getrennt voneinander erfolgen. Es gilt ebenfalls unabhängig davon, ob das Anregungslicht die in dem Messbereich das Minimum aufweisende Intensitätsverteilung ausbildet oder ob das Anregungslicht mit der in dem Messbereich die das Minimum aufweisende Intensitätsverteilung überlappt. Auch in diesem Fall kann jedes der Lichte ein zeitlich kontinuierliches Licht sein.

In bevorzugten Ausführungsformen kann das Anregungslicht gepulst sein. Hieraus ergeben sich verschiedene Vorteile. So kann beispielsweise, wenn zwei oder mehr Anregungslichte verwendet werden, das Beleuchten mit erstem und mit zweitem und/oder auch mit weiterem Anregungslicht alternierend erfolgen, wobei dann auf einen Puls des einen Anregungslichts jeweils ein Puls des anderen Anregungslichts folgen kann. Das schließt nicht aus, dass zwischen zwei in dieser Weise aufeinanderfolgenden Pulse ein oder mehrere weitere Pulse erfolgen, beispielsweise ein Puls von Emissionsunterdrückungslicht. Das Wechseln zwischen den Anregungslichten kann dabei schnell erfolgen, zum Beispiel, wenn zwei Lichtquellen mit derselben Pulsfrequenz betrieben werden, mit der doppelten Pulsfrequenz der beiden Laser. So sind beispielsweise Pulslaser, zum Beispiel Diodenlaser oder faserverstärkte Diodenlaser mit Pulsfrequenzen von 80 MHz verfügbar und für die Durchführung von Ausführungsformen des erfindungsgemäßen Verfahrens geeignet. Werden nun zwei solche Lichtquellen verwendet, so kann die Beleuchtung gepulst mit einer Gesamtfrequenz von 160 MHz erfolgen, wobei jedes einzelne Anregungslicht mit einer Frequenz von 80 MHz in die Probe eingestrahlt wird. Ein Zeitabstand zwischen einzelnen Pulsen beträgt in diesem Fall 6,25 ns und ist damit im Verhältnis zu den Zeitskalen der Bewegungen, die typischerweise mit dem erfindungsgemäßen Verfahren verfolgt werden sollen, sehr klein, sodass das Beleuchten mit den verschiedenen Anregungslichten bezogen auf die zu beobachtenden Prozesse quasi gleichzeitig erfolgt. Dies gilt vielfach auch dann, wenn gepulste Lichtquellen mit niedrigeren Pulsfrequenzen wie z.B. 60 MHz oder 40 MHz verwendet werden. Anwendbare gepulste Lichtquellen können zum Beispiel auch Leuchtdioden sein. Auf weitere Vorteile wird an anderer Stelle eingegangen. Die obigen Aussagen gelten unabhängig davon, ob das Anregungslicht die in dem Messbereich das Minimum aufweisende Intensitätsverteilung ausbildet oder ob das Anregungslicht mit der in dem Messbereich die das Minimum aufweisenden Intensitätsverteilung überlappt.

Die Pulsdauern des gepulsten Anregungslichts können abgestimmt sein auf die photophysikalischen Eigenschaften der Emitter, mit denen Strukturen in der Probe markiert sind. So kann es im Hinblick auf ein Photobleichen von Emittern, insbesondere von Fluoreszenzemittern günstig sein, längere Pulse mit Dauern im Bereich einiger Nanosekunden zu verwenden. In anderen Fällen ist es, zum Beispiel mit Blick auf die Bestimmung von Emissionslebensdauern wie Fluoreszenzlebensdauern oder mit Blick auf eine Zuordnung von Messwerten der Emission nicht nur jeweils zu der Position, an die das Beleuchtungslicht positioniert ist, oder dem Verlauf des Intensitätsanstiegsbereichs, der in der Probe erzeugt wird, sondern auch zu dem Emitter, von dem die Emission ausgeht, günstig, Pulse mit Pulsdauern jeweils kleiner als der erwarteten Emissionslebensdauern der betreffenden Emitter zu verwenden. Typische Fluoreszenzlebensdauern liegen allgemein im Bereich von etwa 1 ns bis etwa 100 ns. Bevorzugte im Rahmen erfindungsgemäßer Verfahren zu nutzende Pulsdauern des Anregungslichts können bei wenigen Nanosekunden oder darunter, beispielsweise bei 3 ns liegen, bevorzugt kleiner als 1 ns, mehr bevorzugt kleiner als 300 ps, weiter bevorzugt kleiner als 150 ps und noch weiter bevorzugt kleiner als 100 ps sein.

Die Bereitstellung einer gepulsten Lichtquelle, die eingerichtet ist, Pulse mit Dauern kleiner als 1 ns oder 150 ps, in der erfindungsgemäßen Vorrichtung hat den Vorteil, dass für alle Proben, die mit Fluoreszenzemittern markiert sind, unabhängig von den konkret vorhandenen Fluoreszenzemittern eine Anregung mit Lichtpulsen, die kurz im Vergleich mit der Fluoreszenzlebensdauer ist, zur Verfügung steht. Die obigen Aussagen gelten unabhängig davon, ob das Anregungslicht die in dem Messbereich das Minimum aufweisende Intensitätsverteilung ausbildet oder ob das Anregungslicht mit der in dem Messbereich die das Minimum aufweisende Intensitätsverteilung überlappt.

Wenn die das Minimum aufweisende Intensitätsverteilung eine Intensitätsverteilung von Emissionsunterdrückungslicht ist, die mit Anregungslicht überlappt, dann kann das Emissionsunterdrückungslicht sowohl zeitlich kontinuierliches Licht als auch gepulstes Licht sein. Dasselbe gilt, wie oberhalb schon erwähnt, für das in diesem Fall zu nutzende Anregungslicht, dessen Verteilung in dem Messbereich mit der Verteilung des Emissionsunterdrückungslichts überlappt. Bevorzugt ist im genannten Fall aber das Anregungslicht gepulstes Licht. Weiter bevorzugt ist im genannten Fall, dass das Emissionsunterdrückungslicht gepulstes Licht ist, und besonders bevorzugt ist im genannten Fall, dass sowohl das Anregungslicht als auch das Emissionsunterdrückungslicht gepulstes Licht ist. Im Fall, dass die verwendeten Emitter Fluoreszenzemitter oder insbesondere Fluorophore sind, ist das Emissionsunterdrückungslicht bevorzugt STED-Licht, insbesondere gepulstes STED-Licht.

Das Messen der Emission erfolgt bevorzugt mit einem oder mehreren Detektoren, der eingerichtet ist oder die eingerichtet sind, einzelne Photonen zu detektieren und somit Photonen zu zählen. Zu solchen Detektoren zählen sogenannte Photonenvervielfacherröhren (Englisch: Photomultiplier Tubes, PMT), Avalanche-Photodioden (APD) und Hybridphotodetektoren (HPD). Besonders bevorzugt wird die Emission mittels Arrays solcher Detektoren gemessen, wobei es bevorzugt ist, dass Aperturen solcher Arrays derart in einer Bildebene angeordnet sind, dass in der Ebene Abstände benachbarter Aperturen kleiner als das Beugungslimit der Abbildung in die Bildebene, bevorzugt kleiner als die Hälfte des Beugungslimits, weiter bevorzugt kleiner als ein Viertel des Beugungslimits sind. Eine solche Anordnung kann beispielsweise mit einem APD-Array mit entsprechend dimensionierten Einzelelementen erreicht werden oder durch Anordnung von Faserenden eines Faserbündels, dessen einzelne Fasern jeweils zu einem einzelnen Detektor, zum Beispiel einem PMT, geleitet werden, in der Bildebene.

Erfolgt das Anregen in dem Beleuchtungs- und Messschritt gepulst, so wird bevorzugt die von dem jeweiligen Puls angeregte Emission zeitaufgelöst gemessen, insbesondere mit einer Zeitauflösung besser als 1 ns, weiter bevorzugt besser als 100 ps, noch weiter bevorzugt besser als 30 ps. Eine in dieser Weise zeitaufgelöste Messung kann beispielsweise genutzt werden, um zeitliche Verläufe der Emission zu erfassen, bei Fluoreszenzemittern, um die Fluoreszenzlebensdauern aus den Messungen zu bestimmen. Das zeitlich aufgelöste Messen hat insbesondere in Verbindung mit einer Bestimmung der Trajektorien des ersten und des zweiten Emitters im Rahmen einer nachträglichen Datenanalyse, das heißt in einem Auswertungsschritt, nach einem Beenden des Verfolgens der Bewegung des ersten und des zweiten Emitters Vorteile.

Die zeitliche Auflösung der Messung kann auch genutzt werden, allgemein um die optische Trennung der beiden Emitter voneinander zu verbessern, zum Beispiel insbesondere um während der Datenaufnahme und/oder nach einem Beenden des Verfolgens der Bewegung des ersten und des zweiten Emitters eine Zuordnung von Messwerten der Emission zu dem Emitter, von dem die Emission ausgeht, zu verbessern. Unterschiedliche Fluoreszenzlebensdauern können, insbesondere bei Durchführung eines Auswertungsschritts nach Abschluss der Datenaufnahme, bei dem auf Basis der in den wiederholt durchgeführten Beleuchtungs- und Messschritten erhaltenen Messwerte der Emission und der zugeordneten jeweiligen Verläufe, die während der Datenaufnahme erzeugt worden waren, Trajektorien des ersten und des zweiten Emitters bestimmt werden, auch das alleinige oder das wesentliche Kriterium sein, anhand dessen optisch unterscheidbare Emitter tatsächlich getrennt werden, das kann heißen, anhand dessen eine Emission, insbesondere ein detektiertes Photon, dem ersten, nicht aber dem zweiten Emitter oder dem zweiten, nicht aber dem ersten Emitter zugeordnet wird.

Alternativ oder zusätzlich zu einer zeitlich hochaufgelösten Messung der Emission kann auch eine gegatete Detektion erfolgen. Diese kann genutzt werden, um Emission zeitabhängig zu erfassen.

Wie schon dargelegt, ist es für das Durchführen der erfindungsgemäßen Verfahren entscheidend, dass eine Unterscheidung der Emitter, das heißt, eine optische Trennung der Emitter erfolgt. Diese optische Trennung erfolgt bei Ausführungsformen, bei denen im jeweiligen Ortsbestimmungsschritt Orte des ersten und des zweiten Emitters bestimmt werden, bereits während der Datenaufnahme, bei anderen Ausführungsformen ist es möglich, dass diese optische Trennung nicht bereits während der Datenaufnahme erfolgt, sondern lediglich nach dem Beenden des Verfolgens des ersten und des zweiten Emitters. Auch dann, wenn im Ortsbestimmungsschritt Orte des ersten und des zweiten Emitters bestimmt werden, muss diese optische Trennung nicht vollständig sein, das heißt, Fehler bei der Zuordnung von Messwerten der Emission zu dem Emitter, von dem die Emission ausgeht, können in gewissem Umfang toleriert werden. Es kann auch der Fall eintreten, dass eine Emission während der Datenaufnahme dem ersten Emitter zugeordnet wird, im Rahmen eines Auswertungsschritts, wie oben genannt, aber dem zweiten.

Insbesondere im Hinblick auf die optische Trennung der Emitter voneinander erfolgt in bevorzugten Ausführungsformen das Messen der Fluoreszenzemission in zwei Detektionskanälen, die sich hinsichtlich der spektralen Empfindlichkeiten unterscheiden, oder in mehr als zwei Kanälen oder mit hoher spektraler Auflösung. Erfolgt die Detektion bei solchen Ausführungsformen in zwei Kanälen, so sind bevorzugt die spektralen Empfindlichkeiten der Detektionskanäle und der erste und der zweite Emitter derart aufeinander abgestimmt, dass eine Empfindlichkeit des ersten Detektionskanals für Emission des zweiten Emitters im Verhältnis zu der Empfindlichkeit für Emission des ersten Emitters minimal ist. Allgemein wird ein geringes Übersprechen der Emission des einen Emitters in den Detektionskanal des anderen Emitters angestrebt. Zwei Detektionskanäle können beispielsweise bereitgestellt werden, indem in einem Detektionsstrahlengang, in dem die Emission zu einer Messvorrichtung geführt wird, ein Farbteiler platziert ist, der den Detektionsstrahlengang in zwei Pfade aufteilt, wobei in einem der Pfade emittiertes Licht unterhalb einer Grenzwellenlänge und im anderen Licht oberhalb dieser Grenzwellenlänge geführt und einem zugehörigen Detektor zugeleitet wird. Diese Grenzwellenlänge kann nun, wenn bestimmte Emitter, insbesondere bestimmte Fluoreszenzemitter, zur Markierung von Strukturen der Probe verwendet werden, so ausgewählt werden, beispielsweise durch Auswählen eines entsprechenden Farbteilers oder durch Einstellen eines Farbteilers mit variabler Grenzwellenlänge, dass eine Empfindlichkeit des ersten Detektionskanals für eine Emission des zweiten Emitters im Verhältnis zu der Empfindlichkeit für eine Emission des ersten Emitters minimal wird. Umgekehrt können auch die Emitter, mit denen Strukturen in der Probe markiert werden, so ausgewählt werden, dass bei Verwendung einer bestimmten Vorrichtung mit fest vorgegebenen Farbkanälen die obige Bedingung erfüllt wird. Insgesamt kann es bei diesen Ausführungsformen vorteilhaft sein, Emitter auszuwählen, deren Emissionen sich spektral möglichst deutlich unterscheiden und die spektralen Detektionskanäle auf deren spektralen Emissionscharakteristiken abzustimmen, um die oben genannte Bedingung zu erfüllen. Die obige Bedingung muss nicht zwingend streng erfüllt werden. In bevorzugten Ausführungsformen werden die Emitter und die spektralen Empfindlichkeiten der Detektionskanäle derart abgestimmt, dass eine Empfindlichkeit des ersten Detektionskanals für Emission des zweiten Emitters im Verhältnis zu der Empfindlichkeit für Emission des ersten Emitters höchstens 10%, bevorzugt höchstens 5%, weiter bevorzugt höchstens 1% der Empfindlichkeit für die Emission des ersten Emitters beträgt und/oder dass eine Empfindlichkeit des zweiten Detektionskanals für Emission des ersten Emitters im Verhältnis zu der Empfindlichkeit für Emission des zweiten Emitters höchstens 10%, bevorzugt höchstens 5%, weiter bevorzugt höchstens 1% der Empfindlichkeit für die Emission des zweiten Emitters beträgt. In bevorzugten Ausführungsformen können die spektralen Zusammensetzungen des ersten Anregungslichts und des zweiten Anregungslichts und der erste und der zweite Emitter daher derart aufeinander abgestimmt sein, dass ein Übersprechen der Emission des zweiten Emitters in den Detektionskanal für den ersten Emitter besonders gering ist, während in Kauf genommen wird, dass das Übersprechen der Emission des ersten Emitters in den Detektionskanal für den zweiten Emitter höher ist. Dies gilt insbesondere für solche Ausführungsformen, bei denen im Ortsbestimmungsschritt ein Ort des ersten Emitters bestimmt wird und auf Basis des im Ortsbestimmungsschritt bestimmten Orts des ersten Emitters für jeden der Emitter ein jeweiliger neuer vermuteter Ortsbereich und insgesamt ein neuer Satz von Verläufen von Intensitätsanstiegsbereichen oder von Positionen des Intensitätsminimums bestimmt wird. Eine Detektion in zwei Spektralkanälen kann mit einfachen Mitteln und gleichzeitig einer hohen Effizienz, das heißt mit geringen Verlusten von emittiertem Licht vor dem Detektieren, erfolgen.

In anderen bevorzugten Ausführungsformen erfolgt das Messen der Emission in mehr als zwei spektral unterschiedlichen Kanälen, zum Beispiel in drei, fünf oder mehr, zehn oder mehr Kanälen. Die spektralen Kanäle können spektral teilweise überlappen oder spektral getrennt sein. Beispielsweise kann das Emissionslicht mittels eines Beugungsgitters oder eines Prismas oder mittels entsprechender aus dem Bereich der Spektrometrie bekannten Einrichtungen aufgespalten und einem Array, beispielsweise einer Zeile von Detektoren zugeführt werden. Es ist aber auch möglich, feste oder einstellbare Farbteiler zu kaskadieren und das Emissionslicht auf diese Weise auf eine Vielzahl einzelner Detektoren zu leiten.

In bevorzugten Ausführungsformen wird beim Messen der Emission der Messwert der Emission des ersten Emitters dem ersten Emitter zugeordnet. Hierbei kann es bevorzugt sein, nur solche Emissionen dem ersten Emitter zuzuordnen, die mit besonders hoher Sicherheit von dem ersten Emitter stammt. Eine solche Zuordnung wird beispielsweise durch die oben genannten und näher ausgeführten Mittel, dass das erste und das zweite Anregungslicht hinsichtlich ihrer spektralen Zusammensetzung unterschiedlich sind, dass das Messen der Fluoreszenzemission in zwei Detektionskanälen, die sich hinsichtlich der spektralen Empfindlichkeiten unterscheiden, oder in mehr als zwei Kanälen erfolgt und dass in dem Beleuchtungs- und Messschritt das Beleuchten mit dem ersten Anregungslicht und das Beleuchten mit dem zweiten Anregungslicht zeitlich getrennt voneinander erfolgen, ermöglicht. Diese Mittel können kumulativ wirken, beispielweise indem zeitlich getrennt mit erstem und davon spektral unterschiedlichem zweitem Anregungslicht beleuchtet wird, wobei das Messen der Fluoreszenzemission in zwei Detektionskanälen, die sich hinsichtlich der spektralen Empfindlichkeiten unterscheiden, oder in mehr als zwei Kanälen erfolgt. Wie weiter oben gesagt, kann auch eine zeitliche Auflösung der Messung genutzt werden, um während der Datenaufnahme eine Zuordnung von Messwerten der Emission zu dem Emitter, von dem die Emission ausgeht, zu verbessern. Aber auch ein Zusammenwirken beispielsweise von einem Beleuchten mit erstem und davon spektral unterschiedlichem zweitem Anregungslicht und einem Messen der Fluoreszenzemission in zwei Detektionskanälen, die sich hinsichtlich der spektralen Empfindlichkeiten unterscheiden, oder in mehr als zwei Kanälen ist auch dann vorteilhaft möglich, wenn das Beleuchten mit erstem und zweitem Anregungslicht nicht zeitlich getrennt erfolgt.

In Ausführungsformen, bei denen beim Messen der Emission der Messwert der Emission des ersten Emitters dem ersten Emitter zugeordnet wird, kann ein Bestimmen des Orts des ersten Emitters auf Basis der dem ersten Emitter zugeordneten Messwerte der Emission erfolgen. Werden als Emitter beispielsweise Fluoreszenzemitter verwendet, von denen der erste Emitter ein Emissionsspektrum mit einem Maximum bei einer großen Wellenlänge hat und der zweite Emitter eines bei einer kleinen Wellenlänge, so kann die Erfassung der Emission des ersten Emitters ohne große Verluste in einem derartigen Spektralbereich erfasst werden, dass keine oder jedenfalls nur vernachlässigbar wenig Emission des zweiten Emitters in diesem Spektralbereich erfasst wird, und zwar selbst dann, wenn der zweite Emitter tatsächlich durch das Anregungslicht für den ersten Emitter angeregt wird. Erfolgt die Messung in dieser Weise, kann daher im Ortsbestimmungsschritt der Ort des ersten Emitters ähnlich genau bestimmt werden, wie er bestimmt werden würde, wenn sich kein zweiter Emitter innerhalb des Messbereichs befinden würde.

In bevorzugten Ausführungsformen werden beim Messen der Emission Messwerte der Emission jeweils dem Emitter zugeordnet, von dem die Emission stammt. Hierbei kann es bevorzugt sein, jeweils nur solche Emission dem betreffenden Emitter zuzuordnen, die mit besonders hoher Sicherheit von dem betreffenden Emitter stammt. Mehrere Mittel, die eine solche Zuordnung ermöglichen, sind im Zusammenhang mit einer Zuordnung der Emission der Messwerte der Emission des ersten Emitters zu dem ersten Emitter weiter oben erläutert. In diesen Ausführungsformen kann es bevorzugt sein, dass in dem Ortsbestimmungsschritt auf Basis der verschiedenen Positionen und der zugeordneten Messwerte der Emission ein Bestimmen der Orte des ersten und des zweiten Emitters erfolgt und dass auf Basis der im Ortsbestimmungsschritt bestimmten Orte beider Emitter für jeden der Emitter ein jeweiliger neuer vermuteter Ortsbereich und insgesamt ein neuer Satz von Verläufen von Intensitätsanstiegsbereichen oder von Positionen von Intensitätsminima bestimmt werden.

In einer bevorzugten Ausgestaltung werden drei spektrale Detektionskanäle genutzt, wobei zwei der Kanäle, hier als Kanäle A und B bezeichnet, so auf die Emissionen des ersten und des zweiten Emitters abgestimmt ist, dass in jedem einzelnen der beiden Kanäle A oder B ausschließlich oder nahezu ausschließlich Emissionen eines zugeordneten ersten oder zweiten Emitters detektiert werden, sodass zu dem Messsignal in dem betreffenden spektralen Kanal A oder B Emissionen des jeweils nicht zugeordneten zweiten oder ersten Emitters zu weniger als 1 % oder bevorzugt zu weniger als 1 ‰ beitragen. Die spektralen Kanäle A und B weisen dann einen spektralen Abstand zueinander auf, innerhalb dessen Emissionen weder in dem Kanal A noch in dem Kanal B detektiert werden. Der dritte der Kanäle, hier als Kanal C bezeichnet, ist dann eingerichtet, um Emissionen in dieser spektralen Lücke zu erfassen. Bevorzugt füllt der spektrale Detektionsbereich des Kanals C die spektrale Lücke aus. Eine solche Detektionsanordnung ist besonders vorteilhaft, weil sie ermöglicht, dass bereits während der Datenaufnahme die in den Kanälen A und B erfassten Emissionen mit großer Sicherheit dem jeweils zugehörenden Emitter zugeordnet werden können. Dies wiederum ermöglicht, dass Positionen sowohl des ersten Emitters als auch des zweiten Emitters nach einem MINFLUX-Verfahren bestimmt werden können, ohne dass die Emissionen des zweiten Emitters die Positionsbestimmung des ersten Emitters stört und umgekehrt ohne dass die Emissionen des ersten Emitters die Positionsbestimmung des zwei Emitters stört. Zu beachten ist dabei, dass auf diese Weise zunächst nur ein bestimmter Anteil der insgesamt detektierten Emissionen für die Positionsbestimmung genutzt wird, wodurch die Positionsbestimmung eine höhere Unsicherheit aufweist. Entscheidend ist während der Durchführung der Beleuchtungs- und Messschritte, dass die Positionen ohne einen Bias bestimmt werden. Das ist hierbei gegeben. Die in dem dritten Kanal detektierte Emission kann dann im Rahmen eines Auswertungsschritts nach Abschluss der Datenerfassung genutzt werden, um die Trajektorien des ersten und des zweiten Emitters mit höherer Genauigkeit zu bestimmen. Bevorzugt werden dafür in dem dritten Kanal erfasste Emissionen klassifiziert, das heißt, jeweils dem ersten oder dem zweiten Emitter zugeordnet. Dies kann beispielsweise erfolgen auf Basis einer zeitaufgelösten Erfassung in dem dritten Kanal, wenn die Emitter verschiedene Lebensdauern aufweisen, oder auf Basis einer zeitlich getrennten Anregung mit spektral voneinander unterschiedlichem erstem und zweitem Anregungslicht.

Wenn die Erfassung der Emissionen in mehr als drei spektralen Kanälen oder spektral höher aufgelöst erfolgt, kann das Prinzip, für die Positionsbestimmungen während der Dauer der Datenaufnahme nur solche Emissionen zu nutzen, die sehr sicher genau einem der Emitter zugeordnet werden können, ebenfalls umgesetzt werden, indem Emissionen entsprechender spektraler Bereiche ausgewählt werden.

Im Rahmen des Auswertungsschritts ist es dann beispielsweise möglich, bei der Bestimmung der Trajektorien der einzelnen Emitter eine gemessene Emission und den ihr zugeordneten Verlauf eines Intensitätsanstiegsbereichs oder die ihr zugeordnete Position eines Intensitätsminimums entsprechend der Sicherheit zu gewichten, mit der die Emission dem betreffenden Emitter zugeordnet werden kann. Die entsprechenden Gewichte können beispielsweise mittels einer ratiometrischen Auswertung der insgesamt aufgenommenen Messwerte oder einer ratiometrischen Auswertung jeweils von Ausschnitten der insgesamt aufgenommenen Messwerte erhalten werden. Es kann auch sinnvoll sein, dass im Rahmen des Auswerteschritts von dem Wert 1 abweichende Gewichte lediglich bei der Bestimmung der Trajektorie eines der Emitter, also des ersten oder des zweiten Emitters, genutzt werden.

Mit den erfindungsgemäßen Verfahren können beispielsweise Bewegungen von Strukturen, zum Beispiel von Motorproteinen, in einer Probe untersucht werden, die in zumindest zwei Bereichen, zum Beispiel, wenn die Struktur eine langgestreckte Struktur ist, an jedem Ende mit jeweils einem der Emitter markiert sind, das heißt, die sowohl mit einem ersten und einem zweiten Emitter markiert sind. In einem solchen Fall sind der erste und der zweite Emitter durch eine Struktur miteinander verbunden. Solche zweifach markierten Strukturen, insbesondere biologische Strukturen, deren Bewegung mittels eines erfindungsgemäßen Verfahrens verfolgt werden soll, weisen zumindest in einer Richtung regelmäßig eine Ausdehnung auf, die kleiner ist als das Beugungslimit. Werden nun die Bewegungen solcher Strukturen verfolgt, reicht es zum Verfolgen der Bewegung der Struktur und damit sowohl des ersten als auch des zweiten Emitters aus, dass in einem Ortsbestimmungsschritt jeweils der Ort des ersten Emitters bestimmt wird. Allein auf Basis dieses Orts kann für jeden der Emitter ein jeweiliger neuer vermuteter Ortsbereich bestimmt werden und insgesamt ein neuer Satz von Positionen bestimmt werden. Dies gilt selbst dann, wenn die Struktur nicht starr ist, sondern sich während des Verfolgens verformt, solange die Abstände der Emitter grundsätzlich durch die Struktur limitiert sind. Es werden dann zwar nicht schon während des Verfolgens getrennte Trajektorien aufgezeichnet, die Trajektorie des zweiten Emitters kann aber im Rahmen eines nachträglichen Auswertungsschritts, das heißt einer Datenanalyse nach einem Beenden des Verfolgens der Bewegung, erfolgen. Dies ist deshalb möglich, weil in den Beleuchtungs- und Messschritten wegen der engen Nachbarschaft der beiden Emitter jeweils auch eine Emission des zweiten Emitters angeregt und gemessen wird, wobei ein Messwert der Emission jeweils der Position, an die das Beleuchtungslicht positioniert ist, zugeordnet wird. Dieser zweite Emitter befindet sich schon auf Grund der Ausdehnung der Struktur, die kleiner als das Beugungslimit ist, sicher in einem Bereich, der von Anregungslicht beleuchtet wird. Für jeden der Emitter kann nun auch ein jeweiliger neuer vermuteter Ortsbereich bestimmt werden. Für den ersten Emitter kann der neue vermutete Ortsbereich um den bestimmten Ort abhängig von der erwarteten oder aus den Messwerten, insbesondere der Anzahl der detektierten Photonen sowie der Größe und der Art des vorbestimmten Satzes von Positionen bestimmten Unsicherheit der Ortsbestimmung festgelegt werden. Für den zweiten Emitter kann der neue vermutete Ortsbereich ausgehend von dem vermuteten Ortsbereich des ersten Emitters beispielsweise abhängig von der Größe der die Emitter verbindenden Struktur oder allgemein auf Basis von Vorwissen über die Struktur, an die die Emitter gekoppelt sind, bestimmt werden. Ausgehend von den neuen vermuteten Ortsbereichen des ersten und des zweiten Emitters wird nun insgesamt ein neuer Satz von Verläufen von Intensitätsanstiegsbereichen oder von Positionen der Intensitätsminima bestimmt. Ein solcher Satz wird bevorzugt derart gewählt, dass eine Verfolgung der Bewegung des ersten Emitters mit hoher Geschwindigkeit und hoher Genauigkeit möglich ist und gleichzeitig so, dass auch für den zweiten Emitter im Rahmen der Datenanalyse nach dem Beenden des Verfolgens der Bewegung eine Trajektorie mit hoher Genauigkeit bestimmt werden kann.

In bevorzugten Ausführungsformen kann in dem Ortsbestimmungsschritt auf Basis der verschiedenen Positionen und der zugeordneten Messwerte der Emission ein gemeinsamer mittlerer Ort beider Emitter bestimmt werden. In diesen Ausführungsformen werden auf Basis des im Ortsbestimmungsschritt bestimmten gemeinsamen mittleren Ortes beider Emitter für jeden der Emitter ein neuer vermuteter Ortsbereich und insgesamt ein neuer Satz von Positionen bestimmt. Die vermuteten Ortsbereiche des ersten Emitters und des zweiten Emitters können dabei identisch sein, sie können sich aber auch unterscheiden. Unterschiedliche vermutete Ortsbereiche können sich beispielsweise dann ergeben, wenn sich die Beiträge der Emitter zum Messsignal quantitativ unterscheiden. In diesem Fall kann der vermutete Ortsbereich des stärker beitragenden Emitters kleiner sein als der des schwächer beitragenden Emitters. Eine Kenntnis, dass quantitativ unterschiedliche Beiträge vorliegen, kann zum Beispiel auf Vorwissen über die Emitter oder auf einer Auswertung der Messdaten beruhen.

Bevorzugt erfolgt die Bestimmung eines gemeinsamen mittleren Orts des ersten Emitters und des zweiten Emitters auf Basis der Gesamtheit der den zugehörigen Verläufen zugeordneten Emissionen. Dies gilt beispielsweise auch dann, wenn Emissionen des ersten und des zweiten Emitters in mehreren unterschiedlichen Spektralkanälen gemessen werden. Dann werden die Messwerte der mehreren Spektralkanäle für die Bestimmung des gemeinsamen mittleren Orts beider Emitter zusammengefasst in einem Datensatz, der die jeweiligen Verläufe oder die jeweiligen Positionen des Intensitätsminimums und zugehörigen Emissionen repräsentiert. Allgemein bedeutet, dass die Gesamtheit der den zugehörigen Verläufen zugeordneten Emissionen für die Bestimmung des gemeinsamen mittleren Orts genutzt wird, dass keine Zuordnung der Emissionen zu entweder dem ersten Emitter oder zu dem zweiten Emitter erfolgt, von der in diesem Zusammenhang Gebrauch gemacht würde. Dies hat beispielsweise den Vorteil, dass das Verfahren weniger empfindlich gegenüber Einflüssen von Hintergrundemissionen, die weder von dem ersten noch von dem zweiten Emitter stammen, sein kann.

Bei der Bestimmung der vermuteten Ortsbereiche und der Bestimmung des neuen Satzes von Verläufen oder von Positionen kann nun bevorzugt berücksichtigt werden, dass die Emitter zueinander einen Abstand aufweisen und dass weder die Position des ersten noch die des zweiten Emitters mit derselben Genauigkeit abgeschätzt wurde, die dann erhalten worden wäre, wenn alle Emissionen von nur einem einzigen Emitter gestammt hätten. Im Falle, dass die verschiedenen Verläufe erhalten werden, indem ein Minimum einer bestimmten Intensitätsverteilung an verschiedenen Positionen platziert wird oder bei denen die Platzierung eines Minimums einer Intensitätsverteilung ab verschiedenen Orten ein Teil der Maßnahmen zum Erhalten verschiedener Verläufe ist, kann das Berücksichtigen des Abstands der Emitter und des Wissens über die erhöhte Unsicherheit der Kenntnis der Positionen der einzelnen Emitter erfolgen, indem die vermuteten Ortsbereiche entsprechend der erhöhten Unsicherheit vergrößert gewählt und die Sätze von Verläufen oder von Positionen angepasst an die vergrößerten vermuteten Ortsbereiche bestimmt werden. Entsprechendes gilt auch dann, wenn die Bestimmung der vermuteten Ortsbereiche und der Sätze von Verläufen auf Basis einer Bestimmung des Ortes des ersten Emitters, nicht aber des zweiten Emitters erfolgt. In diesem Fall kann zwar unter günstigen Umständen der Ort des ersten Emitters mit ähnlich geringer Unsicherheit wie bei Abwesenheit eines zweiten Emitters bekannt sein, im Regelfall ist aber diese Unsicherheit erhöht. Zudem ist der Ort des zweiten Emitters in jedem Falle mit geringerer Sicherheit bekannt.

Ein Abstand der beiden Emitter, zum Beispiel ein maximaler Abstand oder ein mittlerer oder typischer Abstand der Emitter kann in vielen Fällen vor Durchführung des Verfolgens bekannt sein, da häufig gezielt grundsätzlich bekannte Strukturen untersucht werden oder da die Probe vor Durchführen des Verfolgens der Emitter abgebildet worden sein kann. Dementsprechend kann in den beiden vorgenannten Varianten - Bestimmung eines gemeinsamen mittleren Orts beider Emitter und Bestimmung des Orts des ersten Emitters - bevorzugt der vorbekannte Abstand bei der Bestimmung der vermuteten Ortsbereiche und den folgenden Schritten berücksichtigt werden, beispielsweise indem die Ausdehnung der vermuteten Ortsbereiche um den bestimmten gemeinsamen mittleren Ort oder um den Ort des ersten Emitters mindestens ein Vielfaches dieses Abstands, beispielsweise mindestens das Vierfache oder das Zehnfache oder Fünfzigfache des Abstands der beiden Emitter voneinander beträgt.

Allgemein ist es in Ausführungsformen, bei denen die verschiedenen Verläufe des Intensitätsanstiegsbereichs erhalten werden, indem ein Intensitätsminimum einer Intensitätsverteilung an verschiedenen Positionen platziert wird, und bei denen jeweils ein gemeinsamer mittlerer Ort beider Emitter bestimmt wird, bevorzugt, dass der vorbestimmte Satz von Positionen eine erste und eine zweite Position umfasst, die zueinander einen Abstand aufweisen, der mindestens das Vierfache oder das Zehnfache oder Fünfzigfache des Abstands der beiden Emitter voneinander beträgt. Insbesondere wenn dieser Abstand der Emitter zueinander nicht von vornherein bekannt ist, kann es bevorzugt sein, dass der vorbestimmte Satz von Positionen eine erste und eine zweite Position umfasst, die zueinander einen Abstand aufweisen, der mindestens das Vierfache oder das Zehnfache oder Fünfzigfache des Abstands der beiden Emitter voneinander oder mindestens 50 nm oder mindestens 100 nm oder mindestens 200 nm beträgt. Dasselbe gilt auch jeweils einen neuen Satz von Positionen. Auch in anderen Ausführungsformen, bei denen nicht ein gemeinsamer mittlerer Ort beider Emitter bestimmt wird, kann es bevorzugt sein, dass der vorbestimmte Satz von Positionen eine erste und eine zweite Position umfasst, die zueinander Abstände entsprechend obigen Angaben aufweisen.

Mit den erfindungsgemäßen Verfahren können beispielsweise Bewegungen zweier Emitter verfolgt werden, wobei der erste und der zweite Emitter einen Abstand voneinander aufweisen, der kleiner als 100 nm oder kleiner als 50 nm oder kleiner als 20 nm oder kleiner als 10 nm oder sogar kleiner als 5 nm ist.

Ausführungsformen der Erfindung, bei denen im Ortsbestimmungsschritt jeweils ein Ort des ersten Emitters bestimmt und auf Basis dieses Orts neue vermutete Ortsbereiche des ersten und des zweiten Emitters bestimmt werden sowie Ausführungsformen, bei denen jeweils ein gemeinsamer mittlerer Ort beider Emitter bestimmt auf Basis dieses Orts neue vermutete Ortsbereiche des ersten und des zweiten Emitters bestimmt werden, sind insbesondere vorteilhaft anwendbar, wenn die Emitter zueinander solche Abstände kleiner als 50 nm oder kleiner als 20 nm oder insbesondere kleiner als 10 nm oder sogar kleiner als 5 nm aufweisen, insbesondere dann, wenn die Emitter derart an eine Struktur gekoppelt sind, dass während der Messdauer der Abstand der Emitter untereinander nur wenig oder nicht variieren kann.

Bei Verfahren, in denen vorbestimmte Sätze von Positionen eines Intensitätsminimums genutzt werden, kann es bevorzugt sein, dass der vorbestimmte Satz von Positionen einen ersten vorbestimmten Teilsatz von Positionen enthält, die um einen vermuteten Ortsbereich des ersten Emitters herum angeordnet sind, und einen zweiten vorbestimmten Teilsatz von Positionen enthält, die um einen vermuteten Ortsbereich des zweiten Emitters herum angeordnet sind. Diese Teilsätze können sowohl zufällig als auch beabsichtigt identisch sein. Vielfach ist es bevorzugt, dass sich der erste vorbestimmte Teilsatz von Positionen und der zweite vorbestimmte Teilsatz von Positionen voneinander unterscheiden. Dasselbe gilt auch jeweils für einen neuen Satz von Positionen.

Wenn der vorbestimmte Satz von Positionen zwei Teilsätze umfasst, insbesondere wenn er zwei unterschiedliche Teilsätze umfasst, kann es bevorzugt sein, dass in dem Beleuchtungs- und Messschritt das lokale Minimum des ersten Anregungslichts oder das lokale Minimum des Emissionsunterdrückungslichts, das mit dem Anregungslicht überlappt, an den Positionen des ersten vorbestimmten Teilsatzes von Positionen und das lokale Minimum des zweiten Anregungslichts oder das lokale Minimum des Emissionsunterdrückungslichts, das mit dem zweiten Anregungslicht überlappt, an den Positionen des zweiten vorbestimmten Teilsatzes von Positionen positioniert wird. Dasselbe gilt auch jeweils für einen neuen Satz von Positionen, wenn auch dieser entsprechende Teilsätze aufweist.

Wenn der vorbestimmte Satz von Verläufen zwei Teilsätze umfasst, insbesondere wenn er zwei unterschiedliche Teilsätze umfasst, kann es entsprechend dem hier oberhalb beschriebenen Fall bevorzugt sein, dass in dem Beleuchtungs- und Messschritt die Verläufe des ersten Anregungslichts oder die Verläufe des Emissionsunterdrückungslichts, das mit dem ersten Anregungslicht überlappt, entsprechend dem ersten vorbestimmten Teilsatz von Verläufen und die Verläufe des zweiten Anregungslichts oder Verläufe eines Emissionsunterdrückungslichts, das mit dem zweiten Anregungslicht überlappt, entsprechend dem zweiten vorbestimmten Teilsatz von Positionen erzeugt werden. Dasselbe gilt auch jeweils einen neuen Satz von Verläufen, wenn auch dieser entsprechende Teilsätze aufweist.

In den beiden vorgenannten Fällen, dem allgemeineren mit zwei Teilsätzen von Verläufen oder dem spezielleren mit zwei Teilsätzen Positionen, kann es bevorzugt sein, dass in dem Beleuchtungs- und Messschritt zunächst die Verläufe des ersten Anregungslichts oder die Verläufe des Emissionsunterdrückungslichts, das mit dem Anregungslicht überlappt, entsprechend dem ersten vorbestimmten Teilsatz von Verläufen und anschließend die Verläufe des zweiten Anregungslichts oder eines Emissionsunterdrückungslichts, das mit dem zweiten Anregungslicht überlappt, entsprechend dem zweiten vorbestimmten Teilsatz von Verläufen erzeugt werden oder dass in dem Beleuchtungs- und Messschritt zunächst das lokale Minimum des ersten Anregungslichts oder das lokale Minimum des Emissionsunterdrückungslichts, das mit dem Anregungslicht überlappt, an den Positionen des ersten vorbestimmten Teilsatzes von Positionen und anschließend das lokale Minimum des zweiten Anregungslichts oder der Fokus des zweiten Anregungslichts und das Emissionsunterdrückungslicht an den Positionen des zweiten vorbestimmten Teilsatzes von Positionen positioniert wird. Allgemeiner beschrieben, wird also in diesen Ausführungsformen jeweils zunächst der erste Teilsatz von Positionen mit dem zugehörigen Licht oder den zugehörigen Lichten abgearbeitet und anschließend der zweite Teilsatz von Positionen. Es sei an dieser Stelle darauf hingewiesen, dass in bestimmten Ausführungsformen dem ersten und dem zweiten Teilsatz bestimmte Lichte, beispielsweise dem ersten Teilsatz langwelliges Anregungslicht und dem zweiten Teilsatz kurzwelliges Anregungslicht, explizit oder implizit zugewiesen sein kann. Im Hinblick auf diese Ausführungsformen ist festzuhalten, dass es in vielen Fällen nicht auf die Reihenfolge ankommt, in dem die Teilsätze abgearbeitet werden, vielmehr kann also auch zunächst der zweite Teilsatz mit dem zugehörigen Licht und anschließend der erste Teilsatz mit dem zugehörigen Licht abgearbeitet werden.

Bei Verfahren, bei denen Teilsätze nacheinander abgearbeitet werden, kann es bevorzugt sein, insbesondere wenn bei dem Verfahren in einem Ortsbestimmungsschritt Orte des ersten und des zweiten Emitters bestimmt werden, dass nachdem die Verläufe des ersten Anregungslichts oder des Emissionsunterdrückungslichts, das mit dem ersten Anregungslicht überlappt, entsprechend dem ersten vorbestimmten Teilsatz von Verläufen erzeugt wurden, innerhalb eines Zeitraums, in dem der Beleuchtungs- und Messschritt mit dem zweiten Anregungslicht fortgeführt wird, der Ortsbestimmungsschritt auf Basis der verschiedenen Verläufe des ersten vorbestimmten Teilsatzes von Verläufen und der zugeordneten Messwerte der Emission begonnen wird, wobei ein Bestimmen des Ortes des ersten Emitters erfolgt, und auf Basis des im Ortsbestimmungsschritt bestimmten Orts des ersten Emitters für den ersten Emitter ein neuer vermuteter Ortsbereich und ein neuer erster Teilsatz des neuen Satzes von Verläufen bestimmt wird, wobei der neue erste Teilsatz von Verläufen an den neuen vermuteten Ortsbereich des ersten Emitters angepasste Verläufe umfasst. Auch hier kommt es in vielen Fällen nicht auf die Reihenfolge an. Vielmehr ist entscheidend, dass die beiden Teilsätze in einer Weise abgearbeitet werden, dass bereits während der Datenaufnahme, das heißt während der Durchführung eines Beleuchtungs- und Messschritts in einem Zeitraum, in denen Messdaten für einen der Emitter gewonnen werden, ein Ortsbestimmungsschritt bereits mit der Bestimmung eines Orts des anderen Emitters beginnt. Es ist bevorzugt, dass dieser Teil des Ortsbestimmungsschritts, also die Bestimmung des Orts des, zeitlich betrachtet, ersten Emitters noch während der Dauer des Beleuchtungs- und Messschritts abgeschlossen wird, sowie dass auf Basis des Orts des ersten Emitters noch während des Beleuchtungs- und Messschritts ein neuer erster Teilsatz von Verläufen, der an den bestimmten Ort des ersten Emitters angepasst ist, bestimmt wird. In diesem Fall kann der folgende Beleuchtungs- und Messschritt unmittelbar nach Abschluss des gerade betrachteten Beleuchtungs- und Messschritts durchgeführt werden, das heißt, das Wiederholen des Beleuchtungs- und Messschritts kann bereits begonnen werden, bevor der Beleuchtungs- und Messschritt abgeschlossen ist. Sinngemäß gilt das hier Gesagte selbstverständlich dann, wenn die verschiedenen Verläufe erzeugt werden, indem ein Intensitätsminimum an verschiedene Positionen platziert wird, für Positionen der betreffenden Intensitätsminima.

Es ist im oberhalb beschriebenen Fall weiter bevorzugt, dass nachdem die Verläufe des zweiten Anregungslichts oder die Verläufe des Emissionsunterdrückungslichts, das mit dem zweiten Anregungslicht überlappt, entsprechend dem zweiten vorbestimmten Teilsatz erzeugt wurden, innerhalb eines Zeitraums, in dem das Wiederholen des Beleuchtungs- und Messschritts mit dem ersten Anregungslicht begonnen wird, der Ortsbestimmungsschritt auf Basis der verschiedenen Verläufe des zweiten vorbestimmten Teilsatzes von Verläufen und der zugeordneten Messwerte der Emission abgeschlossen wird, wobei ein Bestimmen des Ortes des zweiten Emitters erfolgt, und auf Basis des im Ortsbestimmungsschritt bestimmten Orts des zweiten Emitters für den zweiten Emitter ein neuer vermuteter Ortsbereich und ein neuer zweiter Teilsatz des neuen Satzes von Verläufen bestimmt wird, wobei der neue zweite Teilsatz an den neuen vermuteten Ortsbereich des zweiten Emitters angepasste Verläufe umfasst. Bevorzugt wird der neue zweite Teilsatz bestimmt, bevor der Teil des Wiederholens des Beleuchtungs- und Messschritts, in dem der erste neue Teilsatz abgearbeitet wird, beendet ist. Auch diese Maßnahme dient der Beschleunigung der Datenaufnahme oder genauer der Erhöhung der zeitlichen Auflösung, mit der die Emitter verfolgt werden.

Bei Durchführung bevorzugter Verfahren wird in einem Messbereich ein lokales Minimum einer ein lokales Minimum aufweisende Intensitätsverteilung von Beleuchtungslicht in einer zeitlichen Abfolge an verschiedenen Positionen eines vorbestimmten Satzes von Positionen positioniert. Dies kann auch bedeuten, dass in Zeitabschnitten Bereiche um Positionen des vorbestimmten Satzes von Positionen überstrichen werden. Dasselbe gilt auch jeweils für einen neuen Satz von Positionen. Ähnlich wird beispielsweise auch in der Konfokalmikroskopie von einer Abtastung an Abtastpositionen gesprochen, auch wenn ein Scanner den Abtaststrahl tatsächlich kontinuierlich verlagert. Entsprechendes gilt auch für einen Satz von Verläufen von Intensitätsanstiegsbereichen. Auch hier kann ein Verlauf innerhalb eines einem Verlauf des Satzes von Verläufen zugeordneten Zeitabschnitts variieren, sodass der Verlauf des Satzes von Verläufen einem Mittel der tatsächlichen Verläufe über den Zeitabschnitt entspricht. Dies gilt ganz offensichtlich dann, wenn die verschiedenen Verläufe des Intensitätsanstiegsbereichs erzeugt werden, indem ein Intensitätsminimum einer Intensitätsverteilung an verschieden Positionen platziert wird. Es gilt aber auch dann, wenn die verschiedenen Verläufe auf andere Weise erzeugt werden, beispielsweise durch unterschiedliche Modulationen einer Phase eines Lichtstrahls in einer Pupille oder in der Nähe einer Pupille oder durch Interferenz von Teilstrahlen, deren Phasen gegeneinander verschoben werden.

Dass das lokale Minimum an verschiedenen Positionen eines vorbestimmten Satzes von Positionen um einen vermuteten Ortsbereich positioniert wird, bedeutet dabei nicht, dass der vorbestimmte Satz ausschließlich Positionen um den vermuteten Ortsbereich herum enthält. Vielmehr kann ein solcher Satz auch Positionen innerhalb des vermuteten Ortsbereichs umfassen wie zum Beispiel im Zentrum des vermuteten Ortsbereichs, oder die Positionen können den vermuteten Ortsbereich rasterartig ausfüllen. Wichtig für die Durchführung dieser bevorzugten Ausführungsformen der Erfindung ist, dass das lokale Minimum jedenfalls auch auf vorbestimmte Positionen um den vermuteten Ortsbereich herum positioniert wird. Dies schließt weiterhin auch nicht aus, dass das Minimum beispielsweise entlang einer kontinuierlichen Bahn platziert wird, wobei ein Messwert der Emission jeweils der Position der kontinuierlichen Bahn, an die das Beleuchtungslicht positioniert ist, zugeordnet wird. Diese Bahn kann den vermuteten Ortsbereich umschließen oder ihn überstreichen. Dasselbe gilt auch jeweils sinngemäß für jeden neuen Satz von Positionen, das heißt, für das Wiederholen des Beleuchtungs- und Messschritts. Entsprechend gilt, dass ein vorbestimmter Satz von Verläufen oder ein neuer Satz von Verläufen nicht nur solche Verläufe enthalten darf, die in einem vermuteten Ortsbereich eines der Emitter liegen.

Allgemein ist es bevorzugt, dass das lokale Minimum der Intensitätsverteilung von Anregungslicht oder von Emissionsunterdrückungslicht eine Nullstelle ist.

Das lokale Minimum kann ein 3D-Minimum, ein 2D-Minimum oder ein 1D-Minimum sein. Was jeweils darunter zu verstehen ist, ist oberhalb im Zusammenhang mit Definitionen von Begriffen dargelegt. Wenn ein 3D-Minimum, ein 2D-Minimum oder ein 1D-Minimum genutzt wird, werden offensichtlich auch die jeweils zugehörigen Intensitätsanstiegsbereiche genutzt. Dies wird in der Folge nicht mehr ausdrücklich genannt. Bei dem Verfolgen der Emitter können dabei sowohl verschiedene Typen von Minima sowie verschieden orientierte Minima, insbesondere verschieden orientierte 1D-Minima genutzt werden. Beispielsweise kann in einem Beleuchtungs- und Messschritt ein in einer zweiten Richtung orientiertes erstes 1D-Minimum genutzt werden und anhand der Messdaten kann eine Position des Emitters entlang einer zu der zweiten Richtung senkrechten ersten Richtung bestimmt werden. Sowohl in demselben Beleuchtungs- und Messschritt als auch in einem folgenden Beleuchtungs- und Messschritt kann ein senkrecht zu dem ersten 1D-Minimum orientiertes zweites 1D-Minimum verwendet werden. Wird das zweite 1D-Minimum in demselben Beleuchtungs- und Messschritt platziert, so geschieht dies entsprechend dem zu dem Beleuchtungs- und Messschritt gehörenden vorbestimmten Satz von Positionen. Wird das zweite 1D-Minimum dagegen in einem folgenden Beleuchtungs- und Messschritt, das heißt, bei einem Wiederholen des Beleuchtungs- und Messschritts platziert, so kann dies entsprechend einem neuen Satz von Verläufen oder von Positionen, der anhand des vorgenannten Beleuchtungs- und Messschritts erhalten wurde, geschehen. Dass bei der Platzierung des zweiten 1D-Minimums eine unter Nutzung des ersten Minimums erhaltene Position relevant sein kann, ergibt aus bislang nicht näher thematisiertem, dem Fachmann aber geläufigen Eigenschaften der Minima.

In bevorzugten Ausführungsformen werden das 1D-Minimum und/oder das 2D-Minimum und/oder das 3D-Minimum, erzeugt, in dem Licht moduliert und fokussiert wird. Dann füllt die Intensitätsverteilung ein Fokalvolumen aus. In aller Regel ist nun die Intensitätsverteilung im Fokalvolumen, in dem die genannten Intensitätsanstiegsbereiche ausgebildet werden, von besonderem Interesse. Mit zunehmender Entfernung vom Fokus, das heißt vom Zentrum des Fokalvolumens, entlang der Ausrichtung des 1D-Minimums nimmt die Ausprägung der Intensitätsanstiegsbereiche ab. Es ist daher anzustreben, dass ein 1D-Minimum derart platziert wird, dass der Intensitätsanstiegsbereich, der genutzt wird, im Fokus der Intensitätsverteilung beginnt. Ähnliches gilt, wie dem Fachmann klar ist, auch für ein 2D-Minimum.

Entsprechend kann auch ein 2D-Minimum in Verbindung mit einem 1D-Minimum zur Bestimmung einer Position entlang der Achse des 2D-Minimums sowohl jeweils in denselben als auch in aufeinanderfolgenden Beleuchtungs- und Messschritten verwendet werden. Anstelle eines echten 1D-Minimums kann in diesem Fall beispielsweise ein mittels einer annular phase plate erzeugtes Minimum treten, das in der Nähe des Fokus näherungsweise einem 1D-Minimum entspricht. In dieser Anmeldung wird daher ein mittels annular phase plate (und ohne Vortexphasenplatte) erzeugtes Minimum unter den Begriff 1D-Minimum subsumiert.

Bevorzugt kann ein 2D-Minimum in Verbindung mit einem korrespondierenden 1D-Minimum in einer Weise verwendet werden, dass mehrere oder einige Beleuchtungs- und Messschritte mit einem 2D-Minimum erfolgen und gelegentlich, beispielsweise nach festen Zeitabständen oder wenn die Bewegung der Emitter über eine vorbestimmte Ausdehnung verfolgt worden sind, ein 1D-Minimum genutzt wird. Ein solches Vorgehen eignet sich für viele biologische Proben, da die zu beobachtenden Bewegungen in diesen häufig insbesondere nahezu in einer Ebene parallel zur Probenoberfläche verlaufen und nur wenig in der dazu senkrechten Richtung. Die Verwendung des 1D-Minimums kann in diesen Fällen insbesondere dazu dienen, dass der Fokus der das 2D-Minimum ausbildenden Intensitätsverteilung axial passend positioniert wird, um insbesondere die Ortbestimmungen senkrecht zur Achse des 2D-Minimums zu verbessern.

In anderen Fällen kann die Bewegung des ersten Emitters und des zweiten Emitters an einer Struktur in der Probe ausgerichtet sein. Beispielsweise können sich mit dem ersten und dem zweiten Emitter markierte Motorproteine wie Kinesine entlang von Mikrotubuli bewegen. Solche Mikrotubuli können vor dem Verfolgen beispielsweise mittels MINFLUX abgebildet werden, sodass deren Ausrichtung in der Probe bekannt ist. Dann kann die Abfolge der Verwendung eines 2D-Mininums und eines 1D-Minimums abhängig von dieser bekannten Lage der Struktur, entlang der sich die Emitter bewegen, gewählt werden.

Häufig sind Strukturen, entlang der sich mit einem ersten und einem zweiten Emitter markierte Strukturen bewegen, langgestreckt, das heißt dergestalt, dass sich die Emitter entlang einer festen Bahn bewegen. Daraus ergibt sich, dass in Zeitabschnitten, während der mehrere bis einige Beleuchtungs- und Messschritte mit den zugehörigen weiteren Schritten durchgeführt werden, beide Emitter zumindest nahezu entlang einer Geraden bewegen. In solchen Fällen kann es vorteilhaft sein, 1D-Minima zu verwenden, die derart ausgerichtet sind, dass die oben genannte Gerade normal zu der Ebene, entlang der sich das Minimum der Intensitätsverteilung erstreckt, orientiert ist. Da häufig die Strukturen parallel zu der Probenoberfläche ausgerichtet sind, lässt sich dies unter Verwendung einer Einrichtung zur Drehung einer Linearpolarisation, eines entsprechenden Phasenmodulators und einer Fokussierung des das Minimum ausbildenden Lichts in die Probe erreichen. Hier erfolgt dann bevorzugt, nachdem sich die Emitter über eine vorgegebene Strecke bewegt haben, oder nach einer festen Zeitdauer eine Messung unter Nutzung eines anders, bevorzugt senkrecht zum ersten 1D-Minimum, orientierten 1D-Minimums oder unter Nutzung mehrerer solcher 1D-Minima, beispielsweise eines davon zur Bestimmung der Lage entlang der optischen Achse, oder unter Verwendung eines 2D-Mininums oder eines 3D-Minimums, um sicherzustellen, dass die Emitter sich in weiteren Beleuchtungs- und Messschritten, das heißt bei folgenden Wiederholungen des Beleuchtungs- und Messschritts, innerhalb des Fokusbereichsbereichs befinden, und zur Überprüfung der Bewegungsrichtung oder der Bestimmung einer geänderten Bewegungsrichtung. Bei folgenden Beleuchtungs- und Messschritten, das heißt bei Wiederholungen des Beleuchtungs- und Messschritts, kann dann die Ausrichtung des 1D-Minimums an die neue Bewegungsrichtung angepasst sein. Solche Verfahren unter Nutzung hinsichtlich der Ausrichtung einer Struktur orientierter Minima bieten den Vorteil einer besonders hohen Geschwindigkeit, weil in den betreffenden Schritten aus den Emissionen nur auf eine Lage entlang einer Richtung geschlossen werden muss.

Derartige Verfahren unter Nutzung eines 1D-Minimums können sowohl als MINFLUX-Verfahren als auch als STED-MINFLUX-Verfahren ausgebildet sein.

Derartige Verfahren unter Nutzung eines 1D-Minimums können unter Nutzung nur eines Anregungslichts oder unter Nutzung zweier, insbesondere verschiedener Anregungslichte durchgeführt werden.

Derartige Verfahren unter Nutzung eines 1D-Minimums können sich außerdem auf einen der beiden, also den ersten und oder den zweiten Emitter, richten, während der andere Emitter mittels Minima eines anderen Typs verfolgt wird.

Derartige Verfahren unter Nutzung eines 1D-Minimums können derart durchgeführt werden, dass in einem Ortsbestimmungsschritt ein Ort des ersten Emitters bestimmt wird oder dass in einem Ortsbestimmungsschritt Orte des ersten und des zweiten Emitters bestimmt werden oder dass in einem Ortsbestimmungsschritt ein gemeinsamer mittlerer Ort beider Emitter bestimmt wird.

Erfolgt die Verwendung verschiedener Typen von Minima innerhalb eines Beleuchtungs- und Messschritts, so kann dies zeitlich nacheinander oder auch zeitlich verschränkt, das heißt derart, dass im schnellen Wechsel verschiedene Typen von Minima genutzt werden, sodass die mit den verschiedenen Minima korrespondierenden Messinformation quasi gleichzeitig erhalten werden. In Verbindung mit der Verwendung von gepulstem Licht können Minima verschiedener Typen "pulse interleaved" genutzt werden.

In bevorzugten Ausführungsformen sind der erste Emitter oder der zweite Emitter oder beide Emitter Fluoreszenzemitter. Hierbei können der erste Emitter oder der zweite Emitter oder beide Emitter Fluorophore oder aus Fluorophoren gebildete Einheiten sein. Die Verwendung von aus mehreren Fluorophoren gebildeten Einheiten hat den Vorteil, dass ein größeres Messsignal erhalten werden kann. Demgegenüber hat die Verwendung von einzelnen Fluorophoren als Emitter einerseits den Vorteil, dass der Bereich, aus dem die Fluoreszenz stammt, auf einen minimalen Bereich begrenzt ist, was sich vorteilhaft auf die grundsätzlich erzielbare Auflösung auswirkt. Sowohl der erste Emitter als auch der zweite Emitter können durch Mehrphotonenprozesse oder bevorzugt durch Einzelphotonenprozesse anregbare Emitter sein.

Besonders bevorzugt kann es sein, als ersten Emitter ein einzelnes Fluorophor zu nutzen und als zweiten Emitter eine aus mehreren Fluorophoren gebildete Einheit. Dies ist insbesondere dann günstig, wenn in den Ortsbestimmungsschritten jeweils auf Basis der Emissionen des ersten Emitters, also hier des einzelnen Fluorophors, eine Position des ersten Emitters bestimmt wird, wobei auf Basis dieses Orts für jeden der Emitter ein jeweiliger neuer vermuteter Ortsbereich und insgesamt einer neuer Satz von Verläufen des Intensitätsanstiegsbereichs oder von Positionen des Intensitätsminimums bestimmt werden. Das größere erhaltbare Messsignal bei der Messung der Emissionen des zweiten Emitters kann dann insbesondere in Verbindung mit einer in der Detektionsebene örtlich aufgelösten Erfassung der Emissionen, die einen Airydurchmesser der Punktverbreiterungsfunktion der Abbildung einer Punktquelle auflöst, und wobei der Detektor einen Bereich größer als einen Airydurchmesser, beispielsweise 1,5 Airydurchmesser oder bevorzugt 2 oder mehr Airydurchmesser erfasst, genutzt werden, um auch Positionen von Emittern mit hoher Auflösung zu bestimmen, die während der Beleuchtungs- und Messschritte zwar von Anregungslicht erfasst werden, aber nicht regelmäßig innerhalb von Intensitätsanstiegsbereichen liegen. Ein solcher Fall kann beispielweise eintreten, wenn beide Emitter mit hinsichtlich der spektralen Verteilung identischem Anregungslicht, beispielsweise mit identischem schmalbandigem oder monochromatischem Laserlicht angeregt werden und die Emitter vergleichsweise weit voneinander entfernt sind, beispielsweise einen Abstand aufweisen, der der Beugungsgrenze der optischen Abbildung entspricht oder größer ist, sodass dann, wenn der erste Emitter innerhalb eines Intensitätsanstiegsbereichs liegt, der zweite Emitter im Bereich eines Maximums der Anregungslichtverteilung liegen kann. Bevorzugt erfolgt die Detektion auch hierbei spektral getrennt, sodass auf dem genannten ortsauflösenden Detektor die Detektion von Fluoreszenzlicht des ersten Emitters unterdrückt wird. Die von dem zweiten Emitter stammende Emission kann dann einerseits schon während der Durchführung der Datenerfassung für eine Bestimmung der Position des zweiten Emitters anhand der Auftrefforte der Emissionen auf dem ortsauflösenden Detektor genutzt werden, die Messwerte sind aber insbesondere geeignet, um im Rahmen eines Auswertungsschritts nach Abschluss der Datenerfassung eine Trajektorie des zweiten Emitters zu bestimmen.

Es kann auch dann besonders bevorzugt sein, als ersten Emitter ein einzelnes Fluorophor zu nutzen und als zweiten Emitter eine aus mehreren Fluorophoren gebildete Einheit zu nutzen, wenn zu erwarten ist, dass die mit den Emittern markierten Einheiten zum Beispiel einer biologischen Struktur oder die mit den Emittern markierten zum Beispiel biologischen Strukturen während des Verfolgens der Emitter stark schwankende Abstände aufweisen. Dann kann dann, wenn die Emitter nur kleine Abstände aufweisen, jeweils separat Anregungslicht für den ersten Emitter und für den zweiten Emitter verwendet werden, wobei sowohl der erste als auch der zweite Emitter jeweils nach einem MINFLUX-Verfahren lokalisiert werden, während dann, wenn der Abstand derart gewachsen ist, dass der zweite Emitter in den Einflussbereich eines Maximums der Intensitätsverteilung des Anregungslichts des ersten Emitters gerät, auf die Verwendung von Anregungslicht für den zweiten Emitter verzichtet wird. Hierbei wird dann ausgenutzt, dass auf Grund der großen Intensitäten des Anregungslichts für den ersten Emitter eine an sich geringe Kreuzanregung ausreichen kann, den zweiten Emitter signifikant anzuregen, sodass aus dessen Messsignal seine Position bestimmbar ist. Durch den Verzicht auf Anregungslicht für den zweiten Emitter, dessen Verläufe von Intensitätsanstiegsbereich an die Position des zweiten Emitters angepasst ist, wird in diesem Fall sichergestellt, dass der erste Emitter nicht in den Bereich eines Maximums des Anregungslichts für den zweiten Emitter gerät. Zur Erhöhung des Messsignals des zweiten Emitters, der den genannten großen Abstand von dem ersten Emitter aufweist, kann auch eine Intensitätsverteilung von Anregungslicht für den zweiten Emitter verwendet werden, die gezielt entsprechend einer Position des ersten Emitters platziert wird, das heißt, die ein Minimum am vermuteten Ort des ersten Emitters aufweist.

In weiteren Ausführungsformen können der erste oder der zweite Emitter oder beide Emitter streuende Emitter sein. Ist nur einer der Emitter ein streuender Emitter, dann kann der andere Emitter eine Fluoreszenzemitter sein. Eine Trennung der beiden Emitter kann dann beispielsweise anhand des Zeitabstands der Messung einer Emission von einer Anregung erfolgen, da eine Streuung keine Zeitverzögerung aufweist. Dies ist besonders vorteilhaft möglich, wenn eine Anregung gepulst erfolgt. Sind beide Emitter streuende Emitter, so müssen die Streueigenschaften der beiden Emitter in unterschiedlicher Weise von Wellenlängen des Anregungslichts abhängen. Dies kann zum Beispiel durch die Wahl geeigneter Nanopartikel verwirklicht werden. Es ist dann notwendig, dass zwei spektral verschiedene Anregungslichte verwendet werden. Wenn ein streuender Emitter verwendet wird, ist es aber bevorzugt, wenn der andere Emitter ein Fluoreszenzemitter ist. Außerdem ist es bevorzugt, dass der streuende Emitter selektiv Anregungslicht eines schmalen Wellenlängenbereichs streut. Dann können der streuende Emitter und der Fluoreszenzemitter jeweils separat, das heißt zeitlich getrennt, angeregt werden, was eine besonders gute Trennung der Emissionen und entsprechend eine besonders gute Zuordnung der Emissionen zu dem zugehörigen Emitter ermöglicht. Dies wiederum begünstigt, dass das erfindungsgemäße Verfahren in der Weise durchgeführt wird, dass jeweils in den Ortsbestimmungsschritten auf Basis der verschiedenen Verläufe von Intensitätsanstiegsbereichen und der zugeordneten Messwerte der Emission ein Bestimmen von Orten des ersten und des zweiten Emitters erfolgt.

In bevorzugten Ausführungsformen kann die Probe in dem Beleuchtungs- und Messschritt mit fokussiertem Anregungslicht und einer in einem Messbereich ein lokales Minimum aufweisenden Intensitätsverteilung von Emissionsunterdrückungslicht, insbesondere mit STED-Licht beleuchtet werden. Hierbei sind verschiedene Umsetzungen möglich. Beispielsweise kann ein erstes Anregungslicht, das mit einer Intensitätsverteilung von einem ersten Emissionsunterdrückungslicht überlappt, wobei das erste Anregungslicht und das Emissionsunterdrückungslicht auf den ersten Emitter abgestimmt ist, in Verbindung mit einem zweiten Anregungslicht, das auf den zweiten Emitter abgestimmt ist und in der Probe ein Intensitätsminimum ausbildet, genutzt werden. In diesem Falle kann die Bestimmung des Ortes des ersten Emitters mittels eines MINFLUX-Verfahrens und die des zweiten Emitters mittels eines STED-MINFLUX-Verfahrens erfolgen. Sind die Emitter Fluoreszenzemitter und ist das Fluoreszenzunterdrückungslicht STED-Licht, so ist bevorzugt der erste, oder allgemein derjenige Emitter, dessen Ort mittels STED-MINFLUX bestimmt wird, ein Emitter mit einem längerwelligen Absorptionsmaximum, das heißt, er wird durch längerwelliges Licht angeregt, und ist der zweite Emitter, oder allgemein derjenige Emitter, dessen Ort mittels MINFLUX bestimmt wird, ein Emitter mit einem kürzerwelligen Absorptionsmaximum, das heißt, er wird durch kürzerwelliges Licht angeregt. Auf diese Weise wird verhindert, dass der Emitter, dessen Ort mittels MINFLUX bestimmt wird, durch das STED-Licht für den anderen Emitter angeregt und/oder gebleicht wird.

In einer bevorzugten Ausführungsform kann das Emissionsunterdrückungslicht Wellenlängen umfassen, die die Emission beider Emitter unterdrücken. Es kann beispielsweise schmalbandiges oder monochromatisches Licht, insbesondere Laserlicht sein, das die Emission beider Emitter unterdrückt. Auch dann kann das erste Beleuchtungslicht ein Anregungslicht sein, das die Lichtemission beider Emitter anregt, das heißt, die Messungen der Emissionen sowohl des ersten als auch des zweiten Emitters können auf Basis eines gemeinsamen Paars aus Anregungs- und Emissionsunterdrückungslicht, bevorzugt auf Basis eines gemeinsamen Paars aus Anregungs- und STED-Licht erfolgen. Alternativ kann im Falle, dass das Emissionsunterdrückungslicht Wellenlängen umfasst, die die Emission beider Emitter unterdrücken, bevorzugt ein erstes Anregungslicht, dass auf den ersten Emitter abgestimmt ist, das heißt, bevorzugt diesen anregt, den anderen aber nicht oder nur wenig, und ein zweites Anregungslicht, dass auf den zweiten Emitter abgestimmt ist, das heißt, bevorzugt diesen anregt, den anderen aber nicht oder nur wenig, verwendet werden.

Die Verwendung eines Emissionsunterdrückungslichts, das Wellenlängen umfasst, die die Emission beider Emitter unterdrückt, insbesondere eines entsprechenden schmalbandigen oder monochromatischen Laserlichts, insbesondere STED-Lichts, hat, unabhängig davon, ob ein Anregungslicht oder ob zwei Anregungslichte verwendet werden, den Vorteil, dass die Ortsbestimmung beider Emitter auf Basis der Intensitätsverläufe eines einzigen Lichts erfolgt, das heißt, dass keine Abweichungen in den Ortsbestimmungen aus dem Grunde eines Missalignments zwischen zwei Lichten auftreten kann. Die Verwendung zweier unterschiedlicher, auf die jeweiligen Emitter abgestimmter Anregungslichte hat den Vorteil, dass die Trennung der beiden Emitter verbessert wird, das heißt, dass die Emissionen mit höherer Sicherheit dem zugehörigen Emitter zugeordnet werden können. Es sei aber darauf hingewiesen solche STED-MINFLUX-Verfahren auch als Verfahren, bei denen ein im Ortbestimmungsschritt eine Bestimmung des Orts des ersten (aber nicht des zweiten) Emitters oder eines gemeinsamen mittleren Orts des ersten und des zweiten Emitters ausgeführt werden können. Lediglich eine Kombination von MINFLUX-Verfahren und STED-MINFLUX-Verfahren, wie oben angeben, ist nicht geeignet, das erfindungsgemäße Verfahren in einer Weise auszuführen, dass ein gemeinsamer mittlerer Ort des ersten und des zweiten Emitters bestimmt wird.

Bevorzugt erfolgt nach einem Beenden des Verfolgens der Bewegung des ersten und des zweiten Emitters ein Auswertungsschritt, in dem auf Basis der in den wiederholt durchgeführten Beleuchtungs- und Messschritten erhaltenen Messwerte der Emission und der zugeordneten jeweiligen Positionen, an die das Beleuchtungslicht positioniert war, Trajektorien des ersten und des zweiten Emitters bestimmt werden. Durch diesen Auswertungsschritt wird eine besonders hohe raum-zeitliche Auflösung sichergestellt. Grundsätzlich reduziert das Vorliegen zweier eng benachbarter Emitter die raum-zeitliche Auflösung, mit der jeder einzelne der Emitter in Echtzeit verfolgt werden kann, da Emissionen des einen Emitters die Unsicherheit, mit der die Position des jeweils anderen Emitters bestimmt werden kann, erhöhen. Bei den erfindungsgemäßen Verfahren, bei denen jeweils eine mittlere Position beider Emitter bestimmt wird, oder bei denen die Position nur eines der Emitter im Ortsbestimmungsschritt bestimmt wird, aus der dann neue vermutete Ortsbereiche beider Emitter abgeleitet werden, ist es offensichtlich, dass zumindest der Ortsbereich, innerhalb dessen der zweite Emitter hinreichend sicher liegt, gegenüber mittels MINFLUX bestimmter Ortsbereiche bei Vorliegen nur eines einzigen Emitters unter sonst gleichen Bedingungen vergrößert ist. Bei dieser erfindungsgemäßen Ausführungsform wird nun ausgenutzt, dass die Trajektorien nicht schon bei Durchführung der Datenaufnahme abschließend bestimmt werden müssen. Vielmehr muss während der Datenaufnahme nur sichergestellt sein, dass von beiden Emittern Emissionen gemessen werden, die bestimmten Verläufen oder Positionen von Intensitätsminima zugeordnet werden können. Auch die Zuordnung von Emissionen zu den einzelnen Emittern kann in bestimmten Ausführungsformen erstmalig im genannten Auswertungsschritt erfolgen. In Ausführungsformen, bei denen bereits während der Datenaufnahme eine Zuordnung von Emissionen zu einem Emitter erfolgen, kann eine solche Zuordnung im Rahmen des Auswertungsschritts geändert werden.

In einem solchen Auswertungsschritt kann bei dem Bestimmen der Trajektorien ein vom Abstand abhängiger Einfluss der Nachbarschaft eines Emitters auf die Emission des jeweils anderen Emitters berücksichtigt werden. Insbesondere ein Einfluss eines Förster-Resonanzenergietransfers (FRET) zwischen einem ersten und einem zweiten Fluoreszenzemitter, insbesondere zwischen einem ersten und einem zweiten Fluorophor kann berücksichtigt werden. Dies gilt insbesondere dann, wenn während der Beleuchtungs- und Messschritte Emissionen der Fluoreszenzemitter in mehreren Spektralkanälen oder spektral aufgelöst erfasst werden und zudem entweder ein Anregungslicht verwendet wird, das einen ersten Emitter, der als Donor fungiert, stark anregt, aber einen zweiten Emitter, der als Akzeptor fungiert, nicht oder nur wenig, oder wenn ein erstes und ein vom ersten spektral getrenntes Anregungslicht verwendet werden, wobei die Anregungslichte derart auf den Donor und den Akzeptor abgestimmt sind, dass der Akzeptor möglichst wenig durch das Anregungslicht für den Donor angeregt wird umgekehrt der Donor von dem Anregungslicht für den Akzeptor nicht oder nur sehr wenig angeregt wird. Die letztgenannte Voraussetzung lässt sich bei vielen FRET-Paaren leicht erfüllen, da bei FRET-Paaren aus zwei Fluorophoren regelmäßig das Maximum des Anregungsspektrum des Akzeptors bei Wellenlängen liegt, bei denen die Absorption des Donors verschwindend gering ist; konkret liegt dieses Anregungsmaximum bei längeren Wellenlängen als das Emissionsmaximum des Donors. Wenn FRET auftritt, wird abhängig vom Abstand, je kleiner der Abstand umso mehr, Fluoreszenz des Akzeptors detektiert, wenn eine Anregung ausschließlich mit dem Anregungslicht für den Donor erfolgt. Umgekehrt wird, je kleiner der Abstand ist, umso weniger Fluoreszenz des Donors detektiert.

Zudem wirkt sich die Nachbarschaft zweier Fluorophore unter bestimmten Umständen auf Fluoreszenzlebensdauern aus, beispielsweise beim Auftreten von FRET auf die Fluoreszenzlebensdauer des Donors. Bei der Bestimmung können somit Auswirkungen einer Nachbarschaft bei geeigneten Bedingungen schon dann berücksichtigt werden, wenn die Messung der Emission zumindest eines der Emitter zeitaufgelöst erfolgt.

Bilden die beiden eng benachbarten Emitter ein FRET-Paar, kann es, insbesondere wenn beide Emitter derart an eine Struktur angebunden sind, dass während der gesamten interessierenden Messdauer FRET auftritt, ausreichen, ein Anregungslicht zu nutzen, das den Akzeptor, nicht aber den Donor anregt. Bei solchen Ausführungsformen kann es dann besonders bevorzugt sein, dass während des Ortsbestimmungsschritts ein gemeinsamer mittlerer Ort beider Emitter bestimmt wird. Der vermutete Ortsbereich, der für den ersten Emitter jeweils bestimmt wird, kann in diesem Fall identisch mit dem vermuteten Ortsbereich sein, der für den zweiten Emitter bestimmt wird. Vorteilhaft können aber auch zum Verfolgen der einzelnen Emitter von FRET-Paaren zwei Anregungslichte genutzt werden, die wie weiter oben dargelegt, aufeinander abgestimmt sind. Dies ist insbesondere dann von besonderem Vorteil, wenn der Abstand der Emitter zueinander in Zeiträumen während der interessieren Messdauer so groß ist, dass kein FRET auftritt. Dann können während der ganzen Messdauer in den jeweiligen Ortsbestimmungsschritten für jeden der Emitter separat vermutete Ortsbereiche bestimmt werden.

Im Rahmen des Auswertungsschritts können die Trajektorien des ersten und des zweiten Emitters bevorzugt mittels eines Maximum-Likelihood-Verfahrens oder mittels eines Fehlerquadratminimierungsverfahrens bestimmt werden. Solche Verfahren sind dem Fachmann bekannt, und auf sie wird in in dieser Anmeldung benanntem Stand der Technik Bezug genommen, sowie sie werden im benannten Stand der Technik erläutert.

Im Rahmen des Auswertungsschritts können die Messwerte der Emission auf Basis einer ratiometrischen Auswertung der in den wiederholt durchgeführten Beleuchtungs- und Messschritten erhaltenen Messwerte der Emission den jeweiligen Emittern zugeordnet werden.

Im Rahmen des Auswertungsschritts können die Trajektorien des ersten und des zweiten Emitters bevorzugt auf Basis eines Modells bestimmt werden oder die Trajektorien des ersten Emitters und des zweiten Emitters können mittels eines Verfahrens bestimmt werden, das anhand von Simulationen kalibriert ist. Es können bevorzugt auch beide Maßnahmen kombiniert werden, das heißt, es kann ein Modell genutzt werden, dass anhand von Simulationen kalibriert ist. Die Simulationen selbst können sich wiederum auf Messdaten stützen, zum Beispiel auf Messdaten zur Erfassung der Intensitätsverteilungen in einer Probe.

Die Erfindung richtet sich weiter auf eine Vorrichtung, insbesondere auf ein Mikroskop, dass derart eingerichtet ist, dass ein erfindungsgemäßes Verfahren ausführbar ist.

Die Vorrichtung weist zumindest eine Lichtquelle auf. Bevorzugt ist diese Lichtquelle ein Laser, weiter bevorzugt ein Pulslaser. Bevorzugt ist die Lichtquelle eingerichtet, breitbandiges Licht zu erzeugen, wobei die Lichtquelle oder die Vorrichtung dann bevorzugt weiter eingerichtet ist, dass verschiedene Spektralbereiche ausgewählt werden können, sodass unterschiedliche Anregungslichte und/oder ein Anregungslicht und ein Emissionsunterdrückungslicht, bevorzugt ein STED-Licht, und/oder unterschiedliche Emissionsunterdrückungslichte, bevorzugt STED-Lichte bereitgestellt werden, und/oder die Vorrichtung weist mehrere Lichtquellen, bevorzugt Laser, weiter bevorzugt Pulslaser, weiter bevorzugt sowohl Pulslaser als auch cw-Laser, auf, sodass unterschiedliche Anregungslichte und/oder ein Anregungslicht und ein Emissionsunterdrückungslicht, bevorzugt ein STED-Licht, und/oder unterschiedliche Emissionsunterdrückungslichte, bevorzugt STED-Lichte, in der Vorrichtung bereitgestellt werden. Hierbei ist das Vorhandensein sowohl eines oder mehrerer cw-Laser als auch eines oder mehrere Pulslaser vorteilhaft, weil MINFLUX-Verfahren vielfach günstiger mit cw-Licht durchgeführt werden und STED-Verfahren und somit auch STED-MINFLUX-Verfahren vielfach günstiger mit gepulstem Licht durchgeführt werden. Das Vorhandensein beider Lasertypen ermöglicht somit, sowohl MINFLUX-Verfahren als auch STED-MINFLUX-Verfahren mit den am besten geeigneten Lichtarten (gepulst oder cw) durchzuführen.

Um MINFLUX-Verfahren oder STED-MINFLUX-Verfahren durchzuführen, ist nicht zwingend ein abbildendes Objektiv nötig, da die hohe Ortsauflösung nicht auf einer hoch ortsaufgelösten Abbildung des Lichtes, das aus der Probe emittiert wird, herrührt, sondern auf der Art der Beleuchtung beruht. Demnach muss die Vorrichtung eingerichtet sein, die bei Durchführung eines erfindungsgemäßen Verfahrens zu erzeugenden Intensitätsverteilungen oder Verläufe tatsächlich zu erzeugen und das aus der Probe emittierte Licht zu erfassen.

Dementsprechend weist die erfindungsgemäße Vorrichtung eine Beleuchtungsvorrichtung auf, die eingerichtet ist, Licht der Lichtquelle derart zu beeinflussen, dass das in die Probe geleitete Licht in der Probe in einem Messbereich eine Intensitätsverteilung mit einem lokalen Minimum und angrenzenden Intensitätsanstiegsbereichen ausbildet.

Die erfindungsgemäße Vorrichtung weist dementsprechend weiter eine Lichtbeeinflussungsvorrichtung auf, die eingerichtet ist, verschiedene Verläufe von Intensitätsanstiegsbereichen in der Probe zu erzeugen. Insbesondere kann die Lichtbeeinflussungsvorrichtung eingerichtet sein, das lokale Minimum bezüglich der Probe zu verlagern. Die Lichtbeeinflussungsvorrichtung kann integraler Bestandteil der Beleuchtungsvorrichtung sein.

Weiter weist die erfindungsgemäße Vorrichtung eine Messvorrichtung auf, die eingerichtet ist, Emissionen aus dem Bereich der Probe, in dem ein erster und ein zweiter Emitter, wobei der erste und der zweite Emitter eng benachbart sind, angeregt werden, das heißt aus dem Messbereich, zu erfassen. Weiter bevorzugt ist die Messvorrichtung eingerichtet, Emissionen in mehreren spektralen Kanälen oder spektral aufgelöst zu erfassen. Bevorzugt weist sie dafür einen Farbteiler, weiter bevorzugt einen variablen Farbteiler oder eine Kaskade mehrerer variabler Farbteiler auf.

Bevorzugt weist die Vorrichtung ein Objektiv auf, das eingerichtet ist, Licht der Lichtquelle in eine Probe zu leiten und aus der Probe emittiertes Licht zu sammeln. Dies ermöglicht, dass die Vorrichtung auch für die Durchführung anderer Verfahren, zum Beispiel für Konfokalmikroskopie oder STED-Mikroskopie, genutzt wird.

Bevorzugt ist die Messvorrichtung eingerichtet, aus der Probe emittiertes und durch das Objektiv gesammeltes Licht zu messen. Bevorzugt befindet sich dieses Objektiv im Lichtpfad sowohl der Beleuchtungsvorrichtung als auch der Messeinrichtung.

Bevorzugt umfasst die Lichtbeeinflussungsvorrichtung eine Verlagerungsvorrichtung. Die Verlagerungsvorrichtung umfasst dann bevorzugt einen oder mehrere Scanner, beispielsweise Galvoscanner oder elektro-optische Scanner.

Weiter weist die erfindungsgemäße Vorrichtung eine Speichereinheit auf, die eingerichtet ist, Positionen des lokalen Minimums und zugeordnete Messwerte zu speichern,

Weiter weist die erfindungsgemäße Vorrichtung eine Auswerteeinheit auf, die die eingerichtet ist, Verläufen von Intensitätsanstiegsbereichen oder Positionen des lokalen Minimums zugeordnete Messwerte auszuwerten, wobei auf Basis der verschiedenen Verläufe oder Positionen und der zugeordneten Messwerte der Fluoreszenzemission entweder i) ein Ort des ersten Emitters oder ii) Orte des ersten und des zweiten Emitters oder iii) ein gemeinsamer mittlerer Ort beider Emitter bestimmt wird und auf Basis i) des bestimmten Orts des ersten Emitters oder ii) auf Basis der bestimmten Orte beider Emitter oder iii) auf Basis des bestimmten gemeinsamen mittleren Orts beider Emitter für jeden der Emitter einen jeweiligen Ortsbereich und darauf basierend einen Satz von Verläufen von Intensitätsanstiegsbereichen oder von Positionen des lokalen Minimums bestimmt werden.

Die erfindungsgemäße Vorrichtung weist eine Steuereinheit auf, die eingerichtet ist, die Lichtbeeinflussungsvorrichtung zu steuern, wobei entsprechend dem Satz von Verläufen verschiedene Verläufe von Intensitätsanstiegsbereichen in der Probe erzeugt werden, insbesondere wobei das lokale Minimum an die Positionen des bestimmten Satzes von Positionen verlagert wird.

Weiter weist die erfindungsgemäße Vorrichtung eine Steuereinheit auf, die eingerichtet ist, die Vorrichtung, mittels der das lokale Minimum bezüglich der Probe verlagert werden kann, zu steuern.

Weitere vorteilhafte Elemente werden im Zusammenhang mit der Beschreibung der Verfahren genannt. Die dort genannten technischen Mittel und Elemente können vorteilhaft im erfindungsgemäßen Mikroskop integriert sein.

## Patentansprüche

1. Verfahren zum simultanen Verfolgen der Bewegungen eines ersten vereinzelten Emitters und eines von dem ersten Emitter optisch unterscheidbaren zweiten vereinzelten Emitters mittels eines MINFLUX-Verfahrens oder eines STED-MINFLUX-Verfahrens, wobei der erste und der zweite Emitter voneinander einen Abstand aufweisen, in dem bei einer Durchführung eines MINFLUX-Verfahrens an dem einen der Emitter zwingend der andere der Emitter in den Einflussbereich des Anregungslichts gelangt oder bei Durchführung eines STED-MINFLUX-Verfahrens an dem einen der Emitter zwingend der andere der Emitter in den Einflussbereich des Emissionsunterdrückungslichts gelangt, in einer Probe mit
a) einem Beleuchtungs- und Messschritt, bei dem die Probe mit Intensitätsverteilungen von Anregungslicht oder von Emissionsunterdrückungslicht überlappend mit Anregungslicht, die in einem Messbereich ein lokales Minimum, insbesondere eine Nullstelle, und an das Minimum angrenzende Intensitätsanstiegsbereiche aufweisen, beleuchtet wird, wobei in einer zeitlichen Abfolge verschiedene Verläufe von Intensitätsanstiegsbereichen eines vorbestimmten Satzes von Verläufen von Intensitätsanstiegsbereichen in einem vermuteten Ortsbereich zumindest des ersten Emitters und optional von Verläufen von Intensitätsanstiegsbereichen in einem vermuteten Ortsbereich des zweiten Emitters erzeugt werden und Emissionen des ersten Emitters und des zweiten Emitters gemessen werden, wobei Messwerte der Emission den jeweiligen Verläufen von Intensitätsanstiegsbereichen zugeordnet werden, und
b) einem Ortsbestimmungsschritt, bei dem auf Basis der verschiedenen Verläufe von Intensitätsanstiegsbereichen und der zugeordneten Messwerte der Emission ein Bestimmen entweder i) eines Ortes des ersten Emitters oder ii) von Orten des ersten und des zweiten Emitters oder iii) eines gemeinsamen mittleren Ortes beider Emitter erfolgt,
c) wobei auf Basis i) des im Ortsbestimmungsschritt bestimmten Orts des ersten Emitters oder ii) der im Ortsbestimmungsschritt bestimmten Orte beider Emitter oder iii) des im Ortsbestimmungsschritt bestimmten gemeinsamen mittleren Orts beider Emitter für jeden der Emitter ein jeweiliger neuer vermuteter Ortsbereich und insgesamt ein neuer Satz von Verläufen bestimmt werden,
d) wobei der Beleuchtungs- und Messschritt und der Ortsbestimmungsschritt unter Verwendung des neuen Satzes von Verläufen von Intensitätsanstiegsbereichen wiederholt werden und
e) wobei das Anregungslicht des Beleuchtungs- und Messschritts erstes Anregungslicht zur Anregung des ersten Emitters und zweites Anregungslicht zur Anregung des zweiten Emitters umfasst.

2. Verfahren nach Anspruch 1, **dadurch gekennzeichnet, dass** das erste und das zweite Anregungslicht hinsichtlich ihrer spektralen Zusammensetzung unterschiedlich sind, insbesondere wobei in dem Beleuchtungs- und Messschritt das Beleuchten mit dem ersten Anregungslicht und das Beleuchten mit dem zweiten Anregungslicht zeitlich getrennt voneinander erfolgt.

3. Verfahren nach einem der vorangehenden Ansprüche, **dadurch gekennzeichnet, dass** das lokale Minimum ein 3D-Minimum ist oder dass das lokale Minimum ein 2D-Minimum ist oder dass das lokale Minimum ein 1D-Minimum ist, insbesondere wobei in dem Beleuchtungs- und Messschritt wechselweise Minima verschiedener Typen und/oder verschieden orientierte Minima verwendet werden und/oder dass der Beleuchtungs- und Messschritt unter Verwendung wechselweise von Minima verschiedener Typen und/oder verschieden orientierte Minima durchgeführt und wiederholt werden.

4. Verfahren nach einem der vorangehenden Ansprüche, **dadurch gekennzeichnet, dass** das Anregungslicht gepulst ist, insbesondere wobei das Messen der durch einen jeweiligen Puls angeregten Emission zeitaufgelöst erfolgt, weiter insbesondere mit einer Zeitauflösung besser als 1 ns, weiter bevorzugt besser als 100 ps, noch weiter bevorzugt besser als 30 ps.

5. Verfahren nach einem der vorangehenden Ansprüche, **dadurch gekennzeichnet, dass** in dem Ortsbestimmungsschritt auf Basis der verschiedenen Verläufe und der zugeordneten Messwerte der Emission ein Bestimmen der Orte des ersten und des zweiten Emitters erfolgt und dass auf Basis der im Ortsbestimmungsschritt bestimmten Orte beider Emitter für jeden der Emitter ein jeweiliger neuer vermuteter Ortsbereich und insgesamt ein neuer Satz von Verläufen bestimmt werden.

6. Verfahren nach Anspruch 5, **dadurch gekennzeichnet, dass** der vorbestimmte Satz von Verläufen einen ersten vorbestimmten Teilsatz von Verläufen enthält, die an einen vermuteten Ortsbereich des ersten Emitters angepasst sind, und einen zweiten vorbestimmten Teilsatz von Verläufen enthält, die an einen vermuteten Ortsbereich des zweiten Emitters angepasst sind, insbesondere wobei sich der erste vorbestimmte Teilsatz von Verläufen und der zweite vorbestimmte Teilsatz von Verläufen voneinander unterscheiden, weiter insbesondere wobei in dem Beleuchtungs- und Messschritt die Verläufe des ersten Anregungslichts oder die Verläufe des Emissionsunterdrückungslichts, das mit dem ersten Anregungslicht überlappt, entsprechend dem ersten vorbestimmten Teilsatz von Verläufen und die Verläufe des zweiten Anregungslichts oder Verläufe eines Emissionsunterdrückungslichts, das mit dem zweiten Anregungslicht überlappt, entsprechend dem zweiten vorbestimmten Teilsatz von Positionen erzeugt werden.

7. Verfahren nach Anspruch 6, **dadurch gekennzeichnet, dass** in dem Beleuchtungs- und Messschritt zunächst die Verläufe des ersten Anregungslichts oder die Verläufe des Emissionsunterdrückungslichts, das mit dem Anregungslicht überlappt, entsprechend dem ersten vorbestimmten Teilsatz von Verläufen und anschließend die Verläufe des zweiten Anregungslichts oder eines Emissionsunterdrückungslichts, das mit dem zweiten Anregungslicht überlappt, entsprechend dem zweiten vorbestimmten Teilsatz von Verläufen erzeugt werden, wobei optional, nachdem die Verläufe des ersten Anregungslichts oder des Emissionsunterdrückungslichts, das mit dem ersten Anregungslicht überlappt, entsprechend dem ersten vorbestimmten Teilsatz von Verläufen erzeugt wurden, innerhalb eines Zeitraums, in dem der Beleuchtungs- und Messschritt mit dem zweiten Anregungslicht fortgeführt wird, der Ortsbestimmungsschritt auf Basis der verschiedenen Verläufe des ersten vorbestimmten Teilsatzes von Verläufen und der zugeordneten Messwerte der Emission begonnen wird, wobei ein Bestimmen des Ortes des ersten Emitters erfolgt, und auf Basis des im Ortsbestimmungsschritt bestimmten Orts des ersten Emitters für den ersten Emitter ein neuer vermuteter Ortsbereich und ein neuer erster Teilsatz des neuen Satzes von Verläufen bestimmt wird, wobei der neue erste Teilsatz von Verläufen an den neuen vermuteten Ortsbereich des ersten Emitters angepasste Verläufe umfasst, und/oder nachdem die Verläufe des zweiten Anregungslichts oder die Verläufe des Emissionsunterdrückungslichts, das mit dem zweiten Anregungslicht überlappt, entsprechend dem zweiten vorbestimmten Teilsatz erzeugt wurden, innerhalb eines Zeitraums, in dem das Wiederholen des Beleuchtungs- und Messschritts mit dem ersten Anregungslicht begonnen und bevorzugt abgeschlossen wird, der Ortsbestimmungsschritt auf Basis der verschiedenen Verläufe des zweiten vorbestimmten Teilsatzes von Verläufen und der zugeordneten Messwerte der Emission abgeschlossen wird, wobei ein Bestimmen des Ortes des zweiten Emitters erfolgt, und auf Basis des im Ortsbestimmungsschritt bestimmten Orts des zweiten Emitters für den zweiten Emitter ein neuer vermuteter Ortsbereich und ein neuer zweiter Teilsatz des neuen Satzes von Verläufen bestimmt wird, wobei der neue zweite Teilsatz an den neuen vermuteten Ortsbereich des zweiten Emitters angepasste Verläufe umfasst.

8. Verfahren nach einem der Ansprüche 1 bis 4, **dadurch gekennzeichnet, dass** in dem Ortsbestimmungsschritt auf Basis der verschiedenen Verläufe und der zugeordneten Messwerte der Emission ein Bestimmen des Orts des ersten Emitters erfolgt und dass auf Basis des im Ortsbestimmungsschritt bestimmten Orts des ersten Emitters für den ersten Emitter und für den zweiten Emitter ein jeweiliger neuer vermuteter Ortsbereich und insgesamt ein neuer Satz von Verläufen bestimmt werden, wobei optional der erste und der zweite Emitter durch eine Struktur, insbesondere eine biologische Struktur, an die sie als Marker gekoppelt sind, miteinander verbunden sind, wobei weiter insbesondere der neue vermutete Ortsbereich für den zweiten Emitter auf Basis des im Ortsbestimmungsschritt bestimmten Orts des ersten Emitters und auf Basis von Vorwissen über die Struktur, an die die Emitter gekoppelt sind, bestimmt wird.

9. Verfahren nach einem der Ansprüche 1 bis 4, **dadurch gekennzeichnet, dass** in dem Ortsbestimmungsschritt auf Basis der verschiedenen Verläufe und der zugeordneten Messwerte der Emission ein Bestimmen eines gemeinsamen mittleren Orts beider Emitter erfolgt und dass auf Basis des im Ortsbestimmungsschritt bestimmten gemeinsamen mittleren Ortes beider Emitter ein jeweiliger neuer vermuteter Ortsbereich und insgesamt ein neuer Satz von Verläufen bestimmt werden, insbesondere wobei der erste und der zweite Emitter einen Abstand voneinander aufweisen, der kleiner als 100 nm oder kleiner als 50 nm oder kleiner als 20 nm oder kleiner als 10 nm oder kleiner als 5 nm ist, wobei optional der gemeinsame mittlere Ort beider Emitter auf Basis der Gesamtheit der Messwerte der Emission des ersten Emitters und des zweiten Emitters des Beleuchtungs- und Messschritts bestimmt wird.

10. Verfahren nach einem der vorangehenden Ansprüche, **dadurch gekennzeichnet, dass** die verschiedenen Verläufe von Intensitätsanstiegsbereichen erhalten werden, indem ein Minimum einer Intensitätsverteilung an verschiedenen Positionen platziert wird, sodass ein Satz von Verläufen einem Satz von Positionen des Minimums entspricht, insbesondere wobei der Satz von Positionen eine erste und eine zweite Position umfasst, die zueinander einen Abstand aufweisen, der mindestens das Vierfache oder das Zehnfache oder Fünfzigfache des Abstands der beiden Emitter voneinander oder mindestens 50 nm oder mindestens 100 nm oder mindestens 200 nm beträgt.

11. Verfahren nach einem der vorangehenden Ansprüche, **dadurch gekennzeichnet, dass** der erste und/oder der zweite Emitter ein Fluoreszenzemitter ist, insbesondere wobei der erste und/oder der zweite Fluoreszenzemitter ein Fluorophor oder eine aus Fluorophoren gebildete fluoreszierende Einheit ist, oder **dadurch gekennzeichnet, dass** der erste und/oder der zweite Emitter ein streuender Emitter ist.

12. Verfahren nach einem der vorangehenden Ansprüche , **dadurch gekennzeichnet, dass** die spektralen Zusammensetzungen des ersten Anregungslichts und des zweiten Anregungslichts und der erste und der zweite Emitter derart aufeinander abgestimmt sind, dass eine Anregung des zweiten Emitters durch das erste Anregungslicht im Verhältnis zur Anregung des ersten Emitters durch das erste Anregungslicht minimal ist oder bei gleicher Anregungsintensität höchstens 10%, bevorzugt höchstens 5%, weiter bevorzugt höchstens 1%, noch weiter bevorzugt höchstens 0,1% der Anregung des ersten Emitters beträgt, und/oder dass die spektralen Zusammensetzungen des ersten Anregungslichts und des zweiten Anregungslichts und der erste und der zweite Emitter derart aufeinander abgestimmt sind, dass eine Anregung des ersten Emitters durch das zweite Anregungslicht minimal ist oder insbesondere bei gleicher Anregungsintensität höchstens 5%, bevorzugt höchstens 1 %, weiter bevorzugt höchstens 0,1% der Anregung des zweiten Emitters beträgt.

13. Verfahren nach einem der vorangehenden Ansprüche, **dadurch gekennzeichnet, dass** das Messen der Fluoreszenzemission in zwei Detektionskanälen, die sich hinsichtlich der spektralen Empfindlichkeiten unterscheiden, erfolgt, insbesondere wobei die spektralen Empfindlichkeiten der Detektionskanäle und der erste und der zweite Emitter derart aufeinander abgestimmt sind, dass eine Empfindlichkeit des ersten Detektionskanals für Emission des zweiten Emitters im Verhältnis zu der Empfindlichkeit für Emission des ersten Emitters minimal ist oder höchstens 10%, bevorzugt höchstens 5%, weiter bevorzugt höchstens 1% der Empfindlichkeit für die Emission des ersten Emitters beträgt, und/oder dass die spektralen Empfindlichkeiten der Detektionskanäle und der erste und der zweite Emitter derart aufeinander abgestimmt sind, dass eine Empfindlichkeit des zweiten Detektionskanals für Emission des ersten Emitters im Verhältnis zu der Empfindlichkeit für Emission des zweiten Emitters minimal ist oder höchstens 10%, bevorzugt höchstens 5%, weiter bevorzugt höchstens 1% der Empfindlichkeit für die Emission des zweiten Emitters beträgt.

14. Verfahren nach einem der vorangehenden Ansprüche, **dadurch gekennzeichnet, dass** nach einem Beenden des Verfolgens der Bewegung des ersten und des zweiten Emitters in einem Auswertungsschritt auf Basis der in den wiederholt durchgeführten Beleuchtungs- und Messschritte erhaltenen Messwerte der Emission und der zugeordneten jeweiligen Verläufe, die erzeugt worden waren, Trajektorien des ersten und des zweiten Emitters bestimmt werden, optional wobei bei dem Bestimmen der Trajektorien ein vom Abstand abhängiger Einfluss der Nachbarschaft eines Emitters auf die Emission des jeweils anderen Emitters, soweit vorhanden, insbesondere ein Förster-Resonanzenergietransfer, berücksichtigt wird.

15. Vorrichtung ausgebildet zur Durchführung eines Verfahrens nach einem der vorangehenden Ansprüche zum simultanen Verfolgen der Bewegungen eines ersten vereinzelten Emitters und eines von dem ersten Emitter optisch unterscheidbaren zweiten vereinzelten Emitters mittels eines MINFLUX-Verfahrens oder eines STED-MINFLUX-Verfahrens, wobei der erste und der zweite Emitter voneinander einen Abstand aufweisen, in dem bei einer Durchführung eines MINFLUX-Verfahrens an dem einen der Emitter zwingend der andere der Emitter in den Einflussbereich des Anregungslichts gelangt oder bei Durchführung eines STED-MINFLUX-Verfahrens an dem einen der Emitter zwingend der andere der Emitter in den Einflussbereich des Emissionsunterdrückungslichts gelangt, in einer Probe mit
- einer Lichtquelle, die dazu ausgebildet ist, Anregungslicht und optional Emissionsunterdrückungslicht zu erzeugen, wobei das Anregungslicht erstes Anregungslicht zur Anregung des ersten Emitters und zweites Anregungslicht zur Anregung des zweiten Emitters umfasst,
- einer Beleuchtungsvorrichtung, die eingerichtet ist, Licht der Lichtquelle derart zu beeinflussen, dass das in die Probe geleitete Anregungslicht oder Emissionsunterdrückungslicht überlappend mit Anregungslicht in der Probe in einem Messbereich eine Intensitätsverteilung mit einem lokalen Minimum ausbildet,
- einer Lichtbeeinflussungsvorrichtung, insbesondere einer Verlagerungsvorrichtung, die eingerichtet ist, verschiedene Verläufe von an das Minimum angrenzenden Intensitätsanstiegsbereichen in der Probe zu erzeugen, insbesondere das lokale Minimum bezüglich der Probe zu verlagern, wobei die Lichtbeeinflussungsvorrichtung integraler Bestandteil der Beleuchtungsvorrichtung sein kann, und wobei in einer zeitlichen Abfolge verschiedene Verläufe von Intensitätsanstiegsbereichen eines vorbestimmten oder neu bestimmten Satzes von Verläufen von Intensitätsanstiegsbereichen in einem vermuteten Ortsbereich zumindest des ersten Emitters und optional von Verläufen von Intensitätsanstiegsbereichen in einem vermuteten Ortsbereich des zweiten Emitters erzeugt werden,
- einer Messvorrichtung, die eingerichtet ist, Emissionen des ersten Emitters und des zweiten Emitters aus dem Messbereich zu erfassen, wobei Messwerte der Emission den jeweiligen Verläufen von Intensitätsanstiegsbereichen zugeordnet werden,
- einer Speichereinheit, die eingerichtet ist, Positionen des lokalen Minimums und zugeordnete Messwerte zu speichern,
- einer Auswerteeinheit, die eingerichtet ist, Verläufen von Intensitätsanstiegsbereichen oder Positionen des lokalen Minimums zugeordnete Messwerte auszuwerten, wobei auf Basis der verschiedenen Verläufe oder Positionen und der zugeordneten Messwerte der Fluoreszenzemission entweder i) ein Ort des ersten Emitters oder ii) Orte des ersten und des zweiten Emitters oder iii) ein gemeinsamer mittlerer Ort beider Emitter bestimmt wird und auf Basis i) des bestimmten Orts des ersten Emitters oder ii) auf Basis der bestimmten Orte beider Emitter oder iii) auf Basis des bestimmten gemeinsamen mittleren Orts beider Emitter für jeden der Emitter einen jeweiligen neuen vermuteten Ortsbereich und darauf basierend einen Satz von Verläufen von Intensitätsanstiegsbereichen oder von Positionen des lokalen Minimums bestimmt werden,
- einer Steuereinheit, die eingerichtet ist, die Lichtbeeinflussungsvorrichtung zu steuern, wobei entsprechend dem Satz von Verläufen verschiedene Verläufe von Intensitätsanstiegsbereichen in der Probe erzeugt werden, insbesondere wobei das lokale Minimum an die Positionen des bestimmten Satzes von Positionen verlagert wird.

## Claims

1. A method for simultaneously tracking the movements of a first isolated emitter and a second isolated emitter optically distinguishable from the first emitter by means of a MINFLUX method or a STED-MINFLUX method, wherein the first and second emitters are spaced apart such that, when a MINFLUX method is performed on one of the emitters, the other emitter necessarily enters the influence range of the excitation light, or when a STED-MINFLUX method is performed on one of the emitters, the other emitter necessarily enters the influence range of the emission suppression light, in a sample comprising:
(a) an illumination and measurement step in which the sample is illuminated with intensity distributions of excitation light or of emission-suppressing light overlapping with excitation light, which comprise a local minimum, in particular a zero point, within a measurement range, and intensity increase regions adjacent to the minimum, wherein, in a temporal sequence, various profiles of intensity increase regions from a predetermined set of profiles of intensity increase regions are generated in a presumed location region of at least the first emitter and, optionally, of profiles of intensity increase regions in a presumed location region of the second emitter, and emissions from the first emitter and the second emitter are measured, wherein measured emission values are assigned to the respective profiles of intensity increase regions, and
b) a location determination step, in which, on the basis of the various profiles of intensity increase regions and the assigned emission measurement values, a determination is made of either i) a location of the first emitter, or ii) locations of the first and second emitters, or iii) a common average location of both emitters,
c) wherein, based on i) the location of the first emitter determined in the location determination step, or ii) the locations of both emitters determined in the location determination step, or iii) the common average location of both emitters determined in the location determination step, a respective new presumed location region is determined for each of the emitters and a new set of profiles is determined in total,
d) wherein the illumination and measurement step and the location determination step are repeated using the new set of profiles of intensity increase regions, and
e) wherein the excitation light of the illumination and measurement step comprises first excitation light for exciting the first emitter and second excitation light for exciting the second emitter.

2. A method according to claim 1, **characterised in that** the first and second excitation lights differ in terms of their spectral composition, in particular wherein, in the illumination and measurement step, illumination with the first excitation light and illumination with the second excitation light take place at different times.

3. A method according to any one of the preceding claims, **characterised in that** the local minimum is a 3D minimum, or that the local minimum is a 2D minimum, or that the local minimum is a 1D minimum, in particular wherein, in the illumination and measurement step, minima of different types and/or minima with different orientations are used alternately, and/or that the illumination and measurement step is carried out and repeated using minima of different types and/or minima with different orientations alternately.

4. A method according to one of the preceding claims, **characterised in that** the excitation light is pulsed, in particular wherein the measurement of the emission excited by a respective pulse is performed in a time-resolved manner, further in particular with a time resolution better than 1 ns, further preferably better than 100 ps, and even more preferably better than 30 ps.

5. A method according to any of the preceding claims, **characterised in that**, in the location determination step, the locations of the first and second emitters are determined on the basis of the various profiles and the associated measured values of the emission, and that, on the basis of the locations of both emitters determined in the location determination step, a respective new presumed location region is determined for each of the emitters and, in total, a new set of profiles is determined.

6. A method according to claim 5, **characterised in that** the predetermined set of profiles comprises a first predetermined subset of profiles adapted to a presumed location region of the first emitter, and a second predetermined subset of profiles adapted to a supeceted location region of the second emitter, in particular wherein the first predetermined subset of profiles and the second predetermined subset of profiles differ from one another, and further in particular wherein, in the illumination and measurement step, the profiles of the first excitation light or the profiles of the emission suppression light, which overlaps with the first excitation light, are in accordance with the first predetermined subset of profiles, and the profiles of the second excitation light or profiles of an emission suppression light that overlaps with the second excitation light are generated in accordance with the second predetermined subset of profiles.

7. The method according to claim 6, **characterised in that**, in the illumination and measurement step, the profiles of the first excitation light or the profiles of the emission suppression light, which overlaps with the excitation light, are generated in accordance with the first predetermined subset of profiles, and subsequently the profiles of the second excitation light or of an emission suppression light that overlaps with the second excitation light are generated in accordance with the second predetermined subset of profiles, wherein, optionally, after the profiles of the first excitation light or of the emission suppression light, which overlaps with the first excitation light, have been generated in accordance with the first predetermined subset of profiles, within a period during which the illumination and measurement step is continued with the second excitation light, the location determination step is initiated based on the various profiles of the first predetermined subset of profiles and the associated emission measurement values, wherein the location of the first emitter is determined, and, based on the location of the first emitter determined in the location determination step, a new presumed location region and a new first subset of the new set of profiles are determined for the first emitter, wherein the new first subset of profiles comprises profiles adapted to the new presumed location region of the first emitter, and/or after the profiles of the second excitation light or the profiles of the emission suppression light, which overlaps with the second excitation light, have been generated in accordance with the second predetermined subset, within a period in which the repetition of the illumination and measurement step with the first excitation light is commenced and preferably completed, the location determination step is completed on the basis of the various profiles of the second predetermined subset of profiles and the associated emission measurement values, whereby the location of the second emitter is determined, and, based on the location of the second emitter determined in the location determination step, a new presumed location region and a new second subset of the new set of profiles are determined for the second emitter, wherein the new second subset comprises profiles adapted to the new presumed location region of the second emitter.

8. A method according to any one of claims 1 to 4, **characterised in that**, in the location determination step, the location of the first emitter is determined on the basis of the various profiles and the associated measured values of the emission, and **in that**, on the basis of the location of the first emitter determined in the location determination step, a respective new presumed location region is determined for the first emitter and for the second emitter, and a new set of profiles is determined in total, wherein, optionally, the first and second emitters are connected to one another by a structure, in particular a biological structure, to which they are coupled as markers, wherein, furthermore, in particular, the new presumed location region for the second emitter is determined on the basis of the location of the first emitter determined in the location determination step and on the basis of prior knowledge regarding the structure to which the emitters are coupled.

9. A method according to any one of claims 1 to 4, **characterised in that**, in the location determination step, a common average location of both emitters is determined on the basis of the various profiles and the associated emission measurement values, and **in that**, on the basis of the common average location of both emitters determined in the location determination step, a respective new presumed location region and, in total, a new set of profiles are determined, in particular wherein the first and second emitters are spaced apart by a distance of less than 100 nm or less than 50 nm or less than 20 nm or less than 10 nm or less than 5 nm, wherein, optionally, the common average location of both emitters is determined on the basis of the totality of the measured values of the emission of the first emitter and the second emitter from the illumination and measurement step.

10. A method according to any one of the preceding claims, **characterised in that** the various profiles of intensity increase regions are obtained by placing a minimum of an intensity distribution at different positions, such that a set of profiles corresponds to a set of positions of the minimum, in particular wherein the set of positions comprises a first and a second position which are separated by a distance that is at least four times, ten times or fifty times the distance between the two emitters, or at least 50 nm, or at least 100 nm, or at least 200 nm.

11. A method according to any one of the preceding claims, **characterised in that** the first and/or the second emitter is a fluorescent emitter, in particular wherein the first and/or the second fluorescent emitter is a fluorophore or a fluorescent unit formed from fluorophores, or **characterised in that** the first and/or the second emitter is a scattering emitter.

12. A method according to any one of the preceding claims, **characterised in that** the spectral compositions of the first excitation light and the second excitation light and the first and second emitters are matched such that excitation of the second emitter by the first excitation light is minimal in relation to excitation of the first emitter by the first excitation light, or, at equal excitation intensity, amounts to at most 10%, preferably at most 5%, more preferably at most 1%, and even more preferably at most 0.1% of the excitation of the first emitter, and/or that the spectral compositions of the first excitation light and the second excitation light and the first and second emitters are matched such that excitation of the first emitter by the second excitation light is minimal or, in particular, at most 5% at equal excitation intensities, preferably at most 1%, more preferably at most 0.1% of the excitation of the second emitter.

13. A method according to any of the preceding claims, **characterised in that** the measurement of the fluorescence emission is carried out in two detection channels which differ in terms of spectral sensitivities, in particular wherein the spectral sensitivities of the detection channels and of the first and second emitters are matched such that the sensitivity of the first detection channel to the emission of the second emitter is minimal or at most 10%, preferably at most 5%, more preferably at most 1% of the sensitivity to the emission of the first emitter, , and/or that the spectral sensitivities of the detection channels and the first and second emitters are matched such that the sensitivity of the second detection channel to the emission of the first emitter is minimal or at most 10%, preferably at most 5%, and more preferably at most 1%, of the sensitivity to the emission of the second emitter.

14. A method according to any of the preceding claims, **characterised in that**, following the completion of tracking the movement of the first and second emitters, in an evaluation step based on the measured values of the emission and the associated respective profiles obtained in the repeatedly performed illumination and measurement steps, the trajectories of the first and second emitters are determined, optionally taking into account, when determining the trajectories, a distance-dependent influence of the proximity of one emitter on the emission of the other emitter, if present, in particular a Förster resonance energy transfer.

15. Apparatus configured to carry out a method according to one of the preceding claims for simultaneously tracking the movements of a first isolated emitter and a second isolated emitter optically distinguishable from the first emitter by means of a MINFLUX method or a STED-MINFLUX method, wherein the first and second emitters are spaced apart such that, when a MINFLUX method is performed on one of the emitters, the other emitter necessarily enters the influence range of the excitation light, or when a STED-MINFLUX method is performed on one of the emitters, the other emitter necessarily enters the influence range of the emission-suppression light, in a sample comprising
- a light source configured to generate excitation light and, optionally, emission-suppression light, wherein the excitation light comprises first excitation light for exciting the first emitter and second excitation light for exciting the second emitter.
- an illumination device configured to control light from the light source such that the excitation light or emission suppression light directed into the sample forms, in overlap with excitation light within the sample in a measurement region, an intensity distribution with a local minimum,
- a light control device, in particular a displacement device, which is configured to generate different profiles of intensity increase regions adjacent to the minimum in the sample, in particular to displace the local minimum relative to the sample, wherein the light control device may be an integral part of the illumination device, and wherein, in a temporal sequence, various profiles of intensity increase regions of a predetermined or newly determined set of profiles of intensity increase regions are generated in a presumed location region of at least the first emitter and, optionally, of profiles of intensity increase regions in a presumed location region of the second emitter,
- a measuring device configured to detect emissions from the first emitter and the second emitter within the measuring range, wherein measured values of the emission are assigned to the respective profiles of intensity increase regions,
- a storage unit configured to store positions of the local minimum and associated measured values,
- an evaluation unit configured to evaluate measured values associated with the profiles of intensity increase regions or positions of the local minimum, wherein, on the basis of the various profiles or positions and the associated measured values of the fluorescence emission, either i) a location of the first emitter or ii) locations of the first and second emitters or iii) a common average location of both emitters is determined, and on the basis of i) the determined location of the first emitter, or ii) the determined locations of both emitters, or iii) the determined common average location of both emitters, a respective new presumed location region is determined for each of the emitters, and based thereon a set of profiles of intensity increase regions or of positions of the local minimum is determined,
- a control unit configured to control the light control device, wherein, in accordance with the set of profiles, different profiles of intensity increase regions are generated in the sample, in particular wherein the local minimum is shifted to the positions of the determined set of positions.

## Revendications

1. Procédé de suivi simultané des mouvements d'un premier émetteur isolé et d'un deuxième émetteur isolé, optiquement distinct du premier émetteur, au moyen d'un procédé MINFLUX ou d'un procédé STED-MINFLUX, dans lequel le premier et le deuxième émetteurs sont séparés l'un de l'autre d'une distance telle que, lors de la mise en œuvre d'un procédé MINFLUX sur l'un des émetteurs, l'autre émetteur pénètre nécessairement dans la zone d'influence de la lumière d'excitation, ou lors de la mise en œuvre d'un procédé STED-MINFLUX sur l'un des émetteurs, l'autre émetteur pénètre nécessairement dans la zone d'influence de la lumière de suppression d'émission, dans un échantillon comportant
a) une étape d'éclairage et de mesure, au cours de laquelle l'échantillon est éclairé par des distributions d'intensité de lumière d'excitation ou de lumière de suppression d'émission se superposant à lumière d'excitation, qui présentent, dans une zone de mesure, un minimum local, en particulier un point zéro, ainsi que des zones d'augmentation d'intensité adjacentes à ce minimum, dans laquelle, dans une séquence temporelle, différentes courbes de zones d'augmentation d'intensité d'un ensemble prédéterminé de courbes de zones d'augmentation d'intensité sont générées dans une zone d'emplacement présumée d'au moins le premier émetteur et, en option, de courbes de zones d'augmentation d'intensité dans une zone d'emplacement présumée du deuxième émetteur, et les émissions d' s du premier émetteur et du deuxième émetteur sont mesurées, les valeurs de mesure de l'émission étant associées aux courbes respectives des zones d'augmentation d'intensité, et
b) une étape de localisation, dans laquelle, sur la base des différentes courbes des zones d'augmentation d'intensité et des valeurs de mesure de l'émission qui leur sont associées, on détermine soit i) un emplacement du premier émetteur, soit ii) les emplacements du premier et du deuxième émetteurs, soit iii) un emplacement moyen commun aux deux émetteurs,
c) dans lequel, sur la base i) de l'emplacement du premier émetteur déterminé lors de l'étape de localisation, ou ii) des emplacements des deux émetteurs déterminés lors de l'étape de localisation, ou iii) de l'emplacement moyen commun des deux émetteurs déterminé lors de l'étape de localisation, une nouvelle zone d'emplacement présumée respective est déterminée pour chacun des émetteurs et un nouvel ensemble de courbes est déterminé dans son ensemble,
d) l'étape d'éclairage et de mesure et l'étape de localisation étant répétées en utilisant le nouvel ensemble de courbes de zones d'augmentation d'intensité, et
e) la lumière d'excitation de l'étape d'éclairage et de mesure comprenant une première lumière d'excitation pour exciter le premier émetteur et une deuxième lumière d'excitation pour exciter le deuxième émetteur.

2. Procédé selon la revendication 1, **caractérisé en ce que** la première et la deuxième lumières d'excitation diffèrent quant à leur composition spectrale, en particulier dans lequel, lors de l'étape d'éclairage et de mesure, l'éclairage avec la première lumière d'excitation et l'éclairage avec la deuxième lumière d'excitation ont lieu à des moments distincts l'un de l'autre.

3. Procédé selon l'une des revendications précédentes, **caractérisé en ce que** le minimum local est un minimum 3D, ou **en ce que** le minimum local est un minimum 2D, ou **en ce que** le minimum local est un minimum 1D, en particulier dans lequel, lors de l'étape d'éclairage et de mesure, on utilise alternativement des minima de différents types et/ou des minima orientés différemment et/ou **en ce que** l'étape d'éclairage et de mesure est effectuée et répétée en utilisant alternativement des minima de différents types et/ou des minima orientés différemment.

4. Procédé selon l'une des revendications précédentes, **caractérisé en ce que** la lumière d'excitation est pulsée, en particulier la mesure de l'émission excitée par une impulsion respective s'effectuant avec une résolution temporelle, plus particulièrement avec une résolution temporelle supérieure à 1 ns, de préférence supérieure à 100 ps, et encore de préférence supérieure à 30 ps.

5. Procédé selon l'une des revendications précédentes, **caractérisé en ce que**, lors de l'étape de localisation, les emplacements du premier et du deuxième émetteurs sont déterminés sur la base des différentes courbes et des valeurs de mesure associées de l'émission, et **en ce que**, sur la base des emplacements des deux émetteurs déterminés lors de l'étape de localisation, une nouvelle zone d'emplacement présumée respective est déterminée pour chacun des émetteurs et un nouvel ensemble de courbes est déterminé globalement.

6. Procédé selon la revendication 5, **caractérisé en ce que** l'ensemble prédéterminé de courbes comprend un premier sous-ensemble prédéterminé de courbes adaptées à une zone de localisation présumée du premier émetteur, et un deuxième sous-ensemble prédéterminé de courbes adaptées à une zone de localisation présumée du deuxième émetteur, en particulier, le premier sous-ensemble prédéterminé de profils et le deuxième sous-ensemble prédéterminé de profils étant différents l'un de l'autre, et en particulier, dans l'étape d'éclairage et de mesure, les profils de la première lumière d'excitation ou les profils de la lumière de suppression d'émission qui chevauche la première lumière d'excitation étant conformément au premier sous-ensemble prédéterminé de profils, et les profils de la deuxième lumière d'excitation ou les profils d'une lumière de suppression d'émission qui chevauche la deuxième lumière d'excitation sont générés conformément au deuxième sous-ensemble prédéterminé de profils.

7. Procédé selon la revendication 6, **caractérisé en ce que**, lors de l'étape d'éclairage et de mesure, on applique d'abord les profils de la première lumière d'excitation ou les profils de la lumière de suppression d'émission, qui chevauche la lumière d'excitation, sont générées conformément au premier sous-ensemble prédéterminé de courbes, puis les courbes de la deuxième lumière d'excitation ou d'une lumière de suppression d'émission qui chevauche la deuxième lumière d'excitation sont générées conformément au deuxième sous-ensemble prédéterminé de courbes, après que les profils de la première lumière d'excitation ou de la lumière de suppression d'émission qui chevauche la première lumière d'excitation ont été générés conformément au premier sous-ensemble prédéterminé de profils, au cours d'une période pendant laquelle l'étape d'éclairage et de mesure se poursuit avec la deuxième lumière d'excitation, l'étape de localisation est lancée sur la base des différentes courbes du premier sous-ensemble prédéterminé de courbes et des valeurs de mesure associées de l'émission, une détermination de la position du premier émetteur étant effectuée, et, sur la base de la position du premier émetteur déterminée lors de l'étape de localisation, une nouvelle zone de localisation présumée et un nouveau premier sous-ensemble du nouvel ensemble de courbes sont déterminés pour le premier émetteur, le nouveau premier sous-ensemble de courbes comprenant des courbes adaptées à la nouvelle zone de localisation présumée du premier émetteur, et/ou après que les courbes de la deuxième lumière d'excitation ou les courbes de la lumière de suppression d'émission, qui chevauchent la deuxième lumière d'excitation, ont été générées conformément au deuxième sous-ensemble prédéterminé, au cours d'une période pendant laquelle la répétition de l'étape d'éclairage et de mesure avec la première lumière d'excitation a commencé et est de préférence achevée, l'étape de localisation est achevée sur la base des différentes courbes du deuxième sous-ensemble prédéterminé de courbes et des valeurs de mesure associées de l'émission, une détermination de la position du deuxième émetteur étant effectuée, et, sur la base de la localisation du deuxième émetteur déterminée lors de l'étape de localisation, une nouvelle zone de localisation présumée et un nouveau deuxième sous-ensemble du nouvel ensemble de courbes sont déterminés pour le deuxième émetteur, le nouveau deuxième sous-ensemble comprenant des courbes adaptées à la nouvelle zone de localisation présumée du deuxième émetteur.

8. Procédé selon l'une des revendications 1 à 4, **caractérisé en ce que**, lors de l'étape de localisation, la localisation du premier émetteur est déterminée sur la base des différentes courbes et des valeurs de mesure associées de l'émission, et **en ce que**, sur la base de la localisation du premier émetteur déterminée lors de l'étape de localisation, une nouvelle zone de localisation présumée respective est déterminée pour le premier émetteur et pour le deuxième émetteur, ainsi qu'un nouvel ensemble de courbes, le premier et le deuxième émetteurs étant, en option, reliés l'un à l'autre par une structure, en particulier une structure biologique, à laquelle ils sont couplés en tant que marqueurs, la nouvelle zone de localisation présumée pour le deuxième émetteur étant en outre déterminée sur la base de la localisation du premier émetteur déterminée lors de l'étape de localisation et sur la base de connaissances préalables concernant la structure à laquelle les émetteurs sont couplés.

9. Procédé selon l'une des revendications 1 à 4, **caractérisé en ce que**, lors de l'étape de localisation, une localisation moyenne commune des deux émetteurs est déterminée sur la base des différentes courbes et des valeurs de mesure associées de l'émission, et **en ce que**, sur la base de la localisation moyenne commune des deux émetteurs déterminée lors de l'étape de localisation, une nouvelle zone de localisation présumée respective et, globalement, un nouvel ensemble de courbes sont déterminés, en particulier lorsque le premier et le deuxième émetteurs présentent entre eux une distance inférieure à 100 nm ou inférieure à 50 nm ou inférieure à 20 nm ou inférieure à 10 nm ou inférieure à 5 nm, l'emplacement moyen commun des deux émetteurs étant déterminé, en option, sur la base de l'ensemble des valeurs de mesure de l'émission du premier émetteur et du deuxième émetteur lors de l'étape d'éclairage et de mesure.

10. Procédé selon l'une des revendications précédentes, **caractérisé en ce que** les différentes courbes des plages d'augmentation d'intensité sont obtenues en plaçant un minimum d'une distribution d'intensité à différentes positions, de sorte qu'un ensemble de courbes corresponde à un ensemble de positions du minimum, en particulier, l'ensemble de positions comprenant une première et une deuxième position qui présentent entre elles une distance qui est au moins quatre fois, dix fois ou cinquante fois la distance entre les deux émetteurs, ou au moins 50 nm, ou au moins 100 nm, ou au moins 200 nm.

11. Procédé selon l'une des revendications précédentes, **caractérisé en ce que** le premier et/ou le deuxième émetteur est un émetteur fluorescent, en particulier le premier et/ou le deuxième émetteur fluorescent étant un fluorophore ou une unité fluorescente formée de fluorophores, ou **caractérisé en ce que** le premier et/ou le deuxième émetteur est un émetteur diffusant.

12. Procédé selon l'une des revendications précédentes, **caractérisé en ce que** les compositions spectrales de la première lumière d'excitation et de la deuxième lumière d'excitation ainsi que du premier et du deuxième émetteur sont adaptées les unes aux autres de telle sorte que l'excitation du deuxième émetteur par la première lumière d'excitation soit minimale par rapport à l'excitation du premier émetteur par la première lumière d'excitation, ou, à intensité d'excitation égale, ne dépasse pas 10 %, de préférence au plus 5 %, de manière encore plus préférée au plus 1 %, et de manière encore plus préférée au plus 0,1 % de l'excitation du premier émetteur, et/ou que les compositions spectrales de la première lumière d'excitation et de la deuxième lumière d'excitation ainsi que du premier et du deuxième émetteur sont adaptées les unes aux autres de telle sorte que l'excitation du premier émetteur par la deuxième lumière d'excitation soit minimale ou, en particulier, pour une intensité d'excitation identique, ne dépasse pas 5 %, de préférence 1 %, de préférence encore, au plus 0,1 % de l'excitation du deuxième émetteur.

13. Procédé selon l'une des revendications précédentes, **caractérisé en ce que** la mesure de l'émission de fluorescence s'effectue dans deux canaux de détection qui diffèrent en termes de sensibilités spectrales, en particulier les sensibilités spectrales des canaux de détection et des premier et deuxième émetteurs étant adaptées les unes aux autres de telle sorte que la sensibilité du premier canal de détection à l'émission du deuxième émetteur soit minimale ou au plus égale à 10 %, de préférence au plus égale à 5 %, de préférence au plus 1 % de la sensibilité à l'émission du premier émetteur t, et/ou que les sensibilités spectrales des canaux de détection et des premier et deuxième émetteurs sont adaptées les unes aux autres de telle sorte que la sensibilité du deuxième canal de détection à l'émission du premier émetteur soit, par rapport à la sensibilité à l'émission du deuxième émetteur, minimale ou au plus de 10 %, de préférence au plus 5 %, et de manière encore plus préférée au plus 1 %, de la sensibilité à l'émission du deuxième émetteur.

14. Procédé selon l'une des revendications précédentes, **caractérisé en ce qu'**après la fin du suivi du mouvement des premier et deuxième émetteurs, dans une étape d'évaluation, sur la base des valeurs de mesure de l'émission obtenues lors des étapes d'éclairage et de mesure répétées et des courbes respectives associées qui ont été générées, les trajectoires des premier et deuxième émetteurs sont déterminées, en tenant compte, de manière facultative lors de la détermination des trajectoires, d'une influence dépendante de la distance exercée par le voisinage d'un émetteur sur l'émission de l'autre émetteur, le cas échéant, en particulier d'un transfert d'énergie par résonance de Förster.

15. Dispositif conçu pour la mise en œuvre d'un procédé selon l'une des revendications précédentes, destiné au suivi simultané des mouvements d'un premier émetteur isolé et d'un deuxième émetteur isolé, optiquement distinct du premier émetteur, au moyen d'un procédé MINFLUX ou d'un procédé STED-MINFLUX, le premier et le deuxième émetteurs étant espacés l'un de l'autre d'une distance telle que, lors de la mise en œuvre d'un procédé MINFLUX sur l'un des émetteurs, l'autre émetteur pénètre nécessairement dans la zone d'influence de la lumière d'excitation, ou lors de la mise en œuvre d'un procédé STED-MINFLUX sur l'un des émetteurs, l'autre émetteur pénètre nécessairement dans la zone d'influence de la lumière de suppression d'émission, dans un échantillon comportant
- une source lumineuse conçue pour générer une lumière d'excitation et, en option, une lumière de suppression d'émission, la lumière d'excitation comprenant une première lumière d'excitation destinée à exciter le premier émetteur et une deuxième lumière d'excitation destinée à exciter le deuxième émetteur.
- un dispositif d'éclairage qui est agencé pour influencer la lumière de la source lumineuse de telle sorte que la lumière d'excitation ou la lumière de suppression d'émission guidée dans l'échantillon forme, en chevauchant la lumière d'excitation dans l'échantillon, une distribution d'intensité présentant un minimum local dans une zone de mesure,
- un dispositif de commande de la lumière, en particulier un dispositif de déplacement, qui est agencé pour générer différentes courbes de zones d'augmentation d'intensité adjacentes au minimum dans l'échantillon, en particulier pour déplacer le minimum local par rapport à l'échantillon, le dispositif de commande de la lumière pouvant faire partie intégrante du dispositif d'éclairage, et dans lequel sont générées, dans une séquence temporelle, différentes courbes de zones d'augmentation d'intensité d'un ensemble prédéterminé ou redéfini de courbes de zones d'augmentation d'intensité dans une zone de localisation présumée d'au moins le premier émetteur et, en option, de courbes de zones d'augmentation d'intensité dans une zone de localisation présumée du deuxième émetteur,
- un dispositif de mesure qui est conçu pour détecter les émissions du premier émetteur et du deuxième émetteur à partir de la zone de mesure, les valeurs de mesure de l'émission étant associées aux courbes respectives des plages d'augmentation d'intensité,
- une unité de mémoire, qui est conçue pour enregistrer les positions du minimum local et les valeurs de mesure associées,
- une unité d'évaluation, qui est agencée pour évaluer les courbes des zones d'augmentation d'intensité ou les valeurs de mesure associées aux positions du minimum local, un emplacement du premier émetteur ou des emplacements du premier et du deuxième émetteurs ou un emplacement moyen commun aux deux émetteurs est déterminé et, sur la base i) de l'emplacement déterminé du premier émetteur ou ii) sur la base des emplacements déterminés des deux émetteurs ou iii) sur la base de l'emplacement moyen commun déterminé des deux émetteurs, une nouvelle zone d'emplacement présumée respective est déterminée pour chacun des émetteurs et, sur cette base, un ensemble de courbes de zones d'augmentation d'intensité ou de positions du minimum local est déterminé,
- une unité de commande qui est agencée pour commander le dispositif de commande de la lumière, différentes courbes de zones d'augmentation d'intensité étant générées dans l'échantillon conformément à l'ensemble de courbes, en particulier le minimum local étant déplacé vers les positions de l'ensemble déterminé de positions.
